(19) Europäisches Patentamt / European Patent Office / Office européen des brevets

(11) **EP 4 543 112 A1**

(12) **EUROPEAN PATENT APPLICATION**
published in accordance with Art. 153(4) EPC

(43) Date of publication:
**23.04.2025  Bulletin 2025/17**

(21) Application number: **23838864.9**

(22) Date of filing: **07.07.2023**

(51) International Patent Classification (IPC):
*H04W 72/02* (2009.01)

(52) Cooperative Patent Classification (CPC):
**H04W 72/02; H04W 74/0808**

(86) International application number:
**PCT/CN2023/106345**

(87) International publication number:
**WO 2024/012372 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.07.2022  CN 202210823531**
**11.08.2022  CN 202210961969**
**12.05.2023  CN 202310539657**

(71) Applicant: **Huawei Technologies Co., Ltd.**
**Shenzhen, Guangdong 518129 (CN)**

(72) Inventors:
- JIAO, Ruicheng
  Shenzhen, Guangdong 518129 (CN)
- HE, Hongli
  Shenzhen, Guangdong 518129 (CN)
- LIU, Yun
  Shenzhen, Guangdong 518129 (CN)
- LI, Xueru
  Shenzhen, Guangdong 518129 (CN)
- XUE, Lixia
  Shenzhen, Guangdong 518129 (CN)

(74) Representative: **Körber, Martin Hans**
**Mitscherlich PartmbB**
**Patent- und Rechtsanwälte**
**Karlstraße 7**
**80333 München (DE)**

(54) **RESOURCE SELECTION METHOD AND FIRST TERMINAL**

(57)    This application relates to a resource selection method and a first terminal. The method includes: Before determining a first transmission resource used to transmit a first transport block, a first terminal determines first duration required by the first terminal to perform first LBT, and determines an unavailable resource in a resource selection window based on the first duration; and/or determines second duration required by a second terminal to perform second LBT, and determines an unavailable resource in the resource selection window based on the second duration. The first terminal selects the first transmission resource based on at least one of the first unavailable resource or the second unavailable resource. Duration required by the first terminal and/or another terminal to perform LBT is considered in a resource selection process, to reduce a probability of a failure in performing the LBT before transmission.

A first terminal determines first duration required by the first terminal to perform first LBT, and/or determines second duration required by a second terminal to perform second LBT — S410

The first terminal determines an unavailable first resource set in a resource selection window based on the first duration, and/or the first terminal determines an unavailable second resource set in the resource selection window based on the second duration — S420

The first terminal selects, based on at least one of the first resource set or the second resource set, a first transmission resource used to transmit a first transport block — S430

FIG. 4

EP 4 543 112 A1

**Description**

This application claims priorities to Chinese Patent Application No. 202210823531.5, filed with the China National Intellectual Property Administration on July 13, 2022 and entitled "UNLICENSED FREQUENCY BAND RESOURCE SELECTION METHOD, TERMINAL DEVICE, AND NETWORK DEVICE", to Chinese Patent Application No. 202210961969.X, filed with the China National Intellectual Property Administration on August 11, 2022 and entitled "RESOURCE SELECTION METHOD AND FIRST TERMINAL", and to Chinese Patent Application No. 202310539657.4, filed with the China National Intellectual Property Administration on May 12, 2023 and entitled "RESOURCE SELECTION METHOD AND FIRST TERMINAL", which are incorporated herein by reference in their entireties.

**TECHNICAL FIELD**

This application relates to the communication field, and more specifically, to a resource selection method and a first terminal.

**BACKGROUND**

In a new radio (new radio, NR) release 18 (release 18, R18), to support transmission of a higher-rate service (for example, a virtual reality (virtual reality) service), researchers extend a spectrum used for sidelink (sidelink, SL) communication to an unlicensed spectrum with a large bandwidth. The communication technology is a sidelink-unlicensed (Sidelink-Unlicensed, SL-U) communication technology. Communication on the unlicensed spectrum needs to comply with a channel listening mechanism (for example, a listen-before-talk (listen-before-talk, LBT) mechanism), to ensure fairness in channel access of various types of user equipments (user equipments, UEs) that perform communication on the unlicensed spectrum.

**SUMMARY**

According to a working item description (Working Item Description, WID) requirement of R18, in an SL-U communication scenario, a channel listening mechanism reuses a channel listening mechanism in an existing new-radio unlicensed (New Radio-Unlicensed, NR-U) frequency spectrum. During channel listening, whether a channel is idle is determined through energy detection. If time-frequency resources corresponding to two to-be-transmitted transport blocks (transport blocks, TBs) of two terminal devices are close in time domain, and belong to a same LBT channel in frequency domain, transmission of a transport block earlier in time domain may affect channel listening performed for transmission of a transport block later in time domain. For example, a time-frequency resource corresponding to a to-be-transmitted transport block TB #1 of a terminal device #1 is R#1, a time-frequency resource corresponding to a to-be-transmitted transport block TB #2 of a terminal device #2 is R#2, and an interval between the R#1 and the R#2 in time domain is short (for example, an interval between a last symbol of the R#1 and a first symbol of the R#2 is less than a threshold), and the R#1 and the R#2 belong to a same LBT channel in frequency domain. Transmission of the TB #1 may affect LBT for the TB #2, causing an LBT failure. Consequently, the TB #2 cannot be sent. Therefore, how to reduce a failure probability of sending the transport block becomes an urgent problem to be resolved.

To resolve the foregoing technical problem, this application provides a resource selection method. Duration required by a terminal to perform LBT is considered in a resource selection process, to avoid a transmission failure of a transport block on a resource due to a failure in performing LBT before the resource.

According to a first aspect, a resource selection method is provided. The method may be performed by a terminal device, or may be performed by a component (for example, a chip or a circuit) of the terminal device. This is not limited in this application. For ease of description, the following uses an example in which the method is performed by a first terminal for description.

The resource selection method includes: Before determining a resource used to transmit a first transport block, the first terminal determines first duration required by the first terminal to perform first listen before talk LBT, and determines a first unavailable resource in a resource selection window based on the first duration; and/or the first terminal determines second duration required by a second terminal to perform second LBT, and determines a second unavailable resource in the resource selection window based on the second duration; and the first terminal selects the first transmission resource based on at least one of the first unavailable resource or the second unavailable resource, where the first transmission resource is used by the first terminal to transmit the first transport block, and the resource selection window is used to select the first transmission resource.

For ease of description, the first unavailable resource determined in the resource selection window based on the first duration is referred to as a first resource set in the following. It may be understood as that the first unavailable resource determined in the resource selection window based on the first duration includes one or more resources, the one or more resources are referred to as the first resource set, and a resource included in the first resource set is the first unavailable resource determined from the resource selection window based on the first duration. Similarly, the second unavailable resource determined in the resource selection window based on the second duration is referred to as a second resource set in the following. It may be understood as that the second unavailable resource determined in the resource selection window based on the second duration includes one or more resources, the one or more resources are referred to as the second resource set, and a resource included in the second resource set is the second unavailable resource determined from the resource selection window based on the second duration.

In addition, it should be noted that "and/or" mentioned in this application indicates that three relationships may exist. For example, A and/or B may indicate the following three cases: Only A exists, both A and B exist, and only B exists. In different implementations, "and/or" describes an association relationship between associated objects. For example, in an implementation, "A and/or B" is described. In a subsequent implementation related to the implementation, cases in which A occurs are two cases: A and B, and only A in the implementation; cases in which B occurs are two cases: A and B, and only B in the implementation; and a case in which A and B occur is one case: A and B in the implementation.

Based on the foregoing technical solution, in the resource selection process, the first terminal considers at least one of the first duration required by the first terminal to perform the first LBT or the second duration required by the second terminal to perform the second LBT. Specifically, when the first duration required by the first terminal to perform the first LBT is considered for resource selection, it is expected that a probability of a success in performing LBT before the selected first transmission resource is high. In addition, when the second duration required by the second terminal to perform the second LBT is considered for resource selection, the selected first transmission resource is used to transmit the first transport block, and it is expected that transmission of the first transport block has small impact on LBT performed by the second terminal before a resource. In other words, in the resource selection process, the first terminal considers duration required by a terminal (the first terminal itself and/or another terminal) to perform LBT, so that a probability that the terminal (the first terminal or the second terminal) fails to perform LBT before a resource can be reduced.

When the probability that the terminal fails to perform the LBT is reduced, it may be understood as that a success rate of selecting the resource for transmission is high, that is, a probability that the terminal successfully transmits a transport block is increased. In addition, a probability that the terminal performs resource reselection due to the LBT failure is also reduced, thereby reducing overheads caused by frequent resource reselection of the terminal.

In addition, it should be noted that, that the first terminal determines the first duration required by the first terminal to perform the first listen before talk LBT, determines the second duration required by the second terminal to perform the second LBT, and performs resource selection based on duration required by the first terminal and/or the second terminal to perform LBT is merely an example, and does not constitute any limitation on the protection scope of this application. The first duration and the second duration may alternatively be duration other than the duration required for performing the LBT. For example, in this application, that the first terminal determines a transmission resource may alternatively be: Before determining a first transmission resource used to transmit a first transport block, the first terminal may alternatively determine a first unavailable resource in a resource selection window based on first duration; and/or the first terminal determines a second unavailable resource in the resource selection window based on second duration; and then the first terminal selects the first transmission resource based on at least one of the first unavailable resource or the second unavailable resource, where the first transmission resource is used by the first terminal to transmit the first transport block, and the resource selection window is used to select the first transmission resource.

The first duration may be duration reserved for the first terminal to perform the first LBT. For example, the first duration is not necessarily duration in which the first terminal performs the LBT, but may be maximum duration in which the first terminal performs the LBT (for example, duration estimated via a contention window (contention window, CW)) or a part of duration (for example, $T_d$) in which the first terminal performs the LBT, or may be a predefined or preconfigured fixed slot value (for example, one slot or two slots).

Similarly, the second duration may be duration reserved for the second terminal to perform the second LBT. For example, the second duration is not necessarily duration in which the second terminal performs the LBT, but may be maximum duration in which the second terminal performs the LBT (for example, duration estimated via a CW) or a part of duration (for example, $T_d$) in which the second terminal performs the LBT, or may be a predefined or preconfigured fixed slot value (for example, one slot or two slots).

In some implementations of the first aspect, that the first terminal selects the first transmission resource based on at least one of the first unavailable resource or the second unavailable resource includes: The first terminal excludes the first resource set from the resource selection window; and/or the first terminal excludes the second resource set from the resource selection window, to obtain a candidate resource set, and select the first transmission resource from the candidate resource set.

Based on the foregoing technical solution, that the first transmission resource is selected from the candidate resource set is that the candidate resource set is reported to a higher layer (for example, a MAC layer), and the MAC layer selects the first transmission resource from the candidate resource set.

In this implementation, the candidate resource set is obtained after the first terminal performs resource exclusion based on an RSRP threshold and the first duration and/or the second duration.

Based on the foregoing technical solution, in the resource selection process, the first terminal may exclude the first resource set that is in the resource selection window and that is determined based on the first duration, and/or may exclude the second resource set that is in the resource selection window and that is determined based on the second duration. In other words, before obtaining the candidate resource set, the terminal device may exclude the unavailable resource determined based on the LBT duration, so that when the resource used to transmit the first transport block is selected from the candidate resource set, a case in which the transport block cannot be transmitted on the resource due to the LBT failure is not caused.

In some implementations of the first aspect, the method further includes: The first terminal obtains a candidate resource set; and that the first terminal selects the first transmission resource based on at least one of the first unavailable resource or the second unavailable resource includes: The first terminal selects the first transmission resource based on the candidate resource set and at least one of the first unavailable resource or the second unavailable resource.

In this implementation, the candidate resource set is obtained after the first terminal performs resource exclusion based on the RSRP threshold.

For example, when the first terminal selects the first transmission resource based on the first unavailable resource and the candidate resource set, the first transmission resource is a resource in the candidate resource set and does not belong to the first unavailable resource.

For example, when the first terminal selects the first transmission resource based on the second unavailable resource and the candidate resource set, the first transmission resource is a resource in the candidate resource set and does not belong to the second unavailable resource.

For example, when the first terminal selects the first transmission resource based on the first unavailable resource, the second unavailable resource, and the candidate resource set, the first transmission resource is a resource in the candidate resource set and belongs to neither the first unavailable resource nor the second unavailable resource.

In some implementations of the first aspect, that the first terminal obtains a candidate resource set includes: The first terminal obtains the candidate resource set via a physical layer.

In some implementations of the first aspect, the first unavailable resource or the second unavailable resource is reported by the first terminal to the higher layer via the physical layer. The first terminal reports the first resource set and/or the second resource set to the higher layer via the physical layer. For example, the first terminal reports indication information to the higher layer via the physical layer, where the indication information indicates the first resource set and/or the second resource set.

Based on the foregoing technical solution, in the resource selection process, the first terminal may determine the unavailable resource in the resource selection window, and after obtaining the candidate resource set according to the resource selection method specified in a current protocol, report the obtained candidate resource set and the indication information indicating the unavailable resource to the higher layer (for example, the MAC layer) of the first terminal, and the higher layer is avoided to select the unavailable resource when determining the resource used to transmit the first transport block, so that a case in which the transport block cannot be transmitted on the obtained resource used to transmit the first transport block due to the LBT failure is not caused.

In some implementations of the first aspect, that the first terminal determines a first resource set in a resource selection window based on the first duration includes: The first terminal determines a resource in the first resource set based on the first duration and a resource associated with a second transport block received in a first slot in a resource sensing window; and/or the first terminal determines the resource in the first resource set based on the first duration and a resource associated with a second slot that is not monitored in the resource sensing window, where the resource sensing window is used to monitor a time-frequency resource, and determine the candidate resource set in the resource selection window, received energy of the second transport block is greater than an energy threshold of LBT or reference signal received power RSRP corresponding to the second transport block is greater than an RSRP threshold, and a channel occupied by the second transport block is incapable of being shared by the first transport block of the first terminal.

Based on the foregoing technical solution, the resource in the first resource set determined in the resource selection window based on the first duration includes two parts: one part is related to a resource for receiving the transport block, and the other part is related to a resource that is not monitored in the resource sensing window. The resource that is not monitored is probably a resource associated with the transport block sent by the first terminal. In the resource exclusion process, both the resource related to the resource for receiving the transport block and a resource related to the resource for sending the transport block may be considered, and the consideration is more comprehensive.

In some implementations of the first aspect, the first terminal determines a resource in the first resource set based on the first duration and a resource associated with a second transport block includes: The first terminal determines a second resource in the first resource set based on the first duration and a first resource associated with the second transport block, where the second resource is later than the first resource in time domain, an interval between the second resource and the first resource in time domain is less than or equal to the first duration, and the second resource and the first resource are located on a same LBT channel in frequency domain. The LBT channel may be understood as a frequency-domain unit that is required by an unlicensed spectrum regulation and that is used by the terminal device to perform LBT.

In some implementations of the first aspect, that the first terminal determines a resource in the first resource set based on the first duration and a resource associated with a second slot that is not monitored in the resource sensing window includes: The first terminal determines a fourth resource in the first resource set based on the first duration and a third resource associated with the second slot that is not monitored, where the fourth resource is later than the third resource in time domain, an interval between the fourth resource and the third resource in time domain is less than or equal to the first duration, and the fourth resource and the third resource are located on a same LBT channel in frequency domain.

In some implementations of the first aspect, that the first terminal determines second duration required by a second terminal to perform LBT includes: The first terminal receives a third transport block from the second terminal in the resource sensing window, where the third transport block carries a channel access priority class CAPC value; and the first terminal determines the second duration based on the CAPC value.

In some implementations of the first aspect, before the first terminal determines the first unavailable resource, the method further includes: The first terminal determines that the CAPC value of the first transport block meets a first preset condition. The first preset condition may be that the CAPC value is equal to 1, or the first preset condition may be that the CAPC value is equal to 1 or 2.

In some implementations of the first aspect, that the first terminal determines a second resource set in the resource selection window based on the second duration includes: The first terminal determines a resource in the second resource set based on the second duration and a resource associated with a third transport block received in a third slot in the resource sensing window; and/or the first terminal determines the resource in the second resource set based on the second duration and a resource associated with a second slot that is not monitored in the resource sensing window, where a priority of the third transport block is greater than a priority threshold, and the third transport block is incapable of sharing a channel occupied by the to-be-transmitted first transport block.

Based on the foregoing technical solution, the resource in the second resource set determined in the resource selection window based on the second duration includes two parts: one part is related to a resource for receiving the transport block, and the other part is related to a resource that is not monitored in the resource sensing window. The resource that is not monitored is probably a resource associated with the transport block sent by the first terminal. In the resource exclusion process, both the resource related to the resource for receiving the transport block and a resource related to the resource for sending the transport block may be considered, and the consideration is more comprehensive.

In some implementations of the first aspect, reference signal received power RSRP corresponding to the third transport block is greater than the RSRP threshold.

In some implementations of the first aspect, that the first terminal determines a resource in the second resource set based on the second duration and a resource associated with a third transport block received in the third slot in the resource sensing window includes: The first terminal determines a sixth resource in the second resource set based on the second duration and a fifth resource associated with the third transport block, where the sixth resource is earlier than the fifth resource in time domain, an interval between the sixth resource and the fifth resource in time domain is less than or equal to the second duration, and the sixth resource and the fifth resource are located on a same LBT channel in frequency domain.

In some implementations of the first aspect, before the first terminal determines the second unavailable resource, the method further includes: The first terminal determines that the CAPC value of the third transport block meets the first preset condition. The first preset condition may be that the CAPC value is equal to 1, or the first preset condition may be that the CAPC value is equal to 1 or 2.

In some implementations of the first aspect, that the first terminal determines the resource in the second resource set based on the second duration and the resource associated with the second slot that is not monitored in the resource sensing window includes: The first terminal determines a seventh resource in the second resource set based on the second duration and the third resource associated with the second slot that is not monitored, where the seventh resource is earlier than the third resource in time domain, an interval between the seventh resource and the third resource in time domain is less than or equal to the second duration, and the seventh resource and the third resource are located on a same LBT channel in frequency domain.

In some implementations of the first aspect, that the first terminal obtains a candidate resource set includes: The first terminal excludes the resource from the resource selection window based on the reference signal received power RSRP threshold, where the RSRP threshold is a higher-layer parameter of the first terminal, and is preconfigured or configured.

Based on the foregoing technical solution, the first terminal may further consider the RSRP threshold in the resource selection process. In an existing protocol-related resource selection process, the first terminal considers the RSRP threshold. In other words, the solution in this application may be combined with a resource selection solution in the existing protocol. The solution in this application is equivalent to an improvement of the existing resource selection solution (compared with the resource selection solution in the existing protocol, the solution in this application increases impact of the LBT duration on resource selection), and backward compatibility of the solution is improved.

For ease of description, the unavailable resource excluded based on the RSRP threshold may be referred to as a third resource set in the following. It may be understood as that a third unavailable resource determined in the resource selection window based on the RSRP threshold includes one or more resources, the one or more resources are referred to as the third resource set, and a resource included in the third resource set is the unavailable resource determined from the resource selection window based on the RSRP threshold.

In some implementations of the first aspect, before the first terminal obtains the candidate resource set, the method further includes: The first terminal adjusts at least one of a value of the first duration, a value of the second duration, a value of the reference signal received power RSRP threshold, and a value of the priority threshold; and the first terminal determines the first unavailable resource and/or the second unavailable resource in the resource selection window based on at least one of an adjusted value of the first duration, an adjusted value of the second duration, an adjusted value of the RSRP threshold, and an adjusted value of the priority threshold.

Based on the foregoing technical solution, the value of the second duration and the value of the priority threshold may be dynamically adjusted, to select an appropriate parameter to determine the unavailable resource, so that after the resource is excluded, a quantity of resources in the candidate resource set is greater than M*X%.

In some implementations of the first aspect, the first LBT is associated with an unlicensed frequency band.

In some implementations of the first aspect, the second LBT is associated with an unlicensed frequency band.

In some implementations of the first aspect, that a first terminal determines first duration required by the first terminal to perform first LBT includes: The first terminal determines, based on preconfigured or predefined first duration, the first duration required by the first terminal to perform the first LBT.

In some implementations of the first aspect, that the first terminal determines second duration required by a second terminal to perform second LBT includes: The first terminal determines, based on preconfigured or predefined second duration, the second duration required by the second terminal to perform the second LBT.

According to a second aspect, a terminal device is provided. The terminal device is configured to perform any one of the first aspect and the implementations of the first aspect. Specifically, the terminal device includes a processor and a memory. The memory is configured to store a computer program. The processor is configured to invoke the computer program from the memory and run the computer program, so that the terminal device performs any one of the first aspect and the implementations of the first aspect.

According to a third aspect, a communication apparatus is provided. The communication apparatus is configured to perform the method provided in any one of the first aspect and the implementations of the first aspect or any one of the second aspect and the implementations of the second aspect. Specifically, the communication apparatus may include units and/or modules (for example, a processing unit and a transceiver unit) configured to perform the method provided in any one of the first aspect and the implementations of the first aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, this application provides a processor, configured to perform the method provided in the foregoing first aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a fifth aspect, a computer-readable storage medium is provided. The computer-readable storage medium stores a computer program. When the computer program runs on a communication apparatus, the communication apparatus performs the method in any one of the implementations of the first aspect.

According to a sixth aspect, a computer program product including instructions is provided. When the computer program product runs on a computer, the computer performs the method provided in any one of the implementations of the first aspect.

According to a seventh aspect, a chip is provided. The chip includes a processor and a communication interface. The processor reads instructions through the communication interface, to perform the method provided in any one of the implementations of the first aspect.

Optionally, in an implementation, the chip further includes a memory. The memory stores a computer program or instructions, the processor is configured to execute the computer program or the instructions stored in the memory, and when the computer program or the instructions are executed, the processor is configured to perform the method provided in any one of the implementations of the first aspect.

According to an eighth aspect, a communication system is provided, including the terminal device in the second aspect.

## BRIEF DESCRIPTION OF DRAWINGS

FIG. 1 and FIG. 2 are diagrams of communication systems applicable to this application;

(a) in FIG. 3 is a diagram of an example of a method in which UE excludes a resource from a resource selection window based on a sensing result;

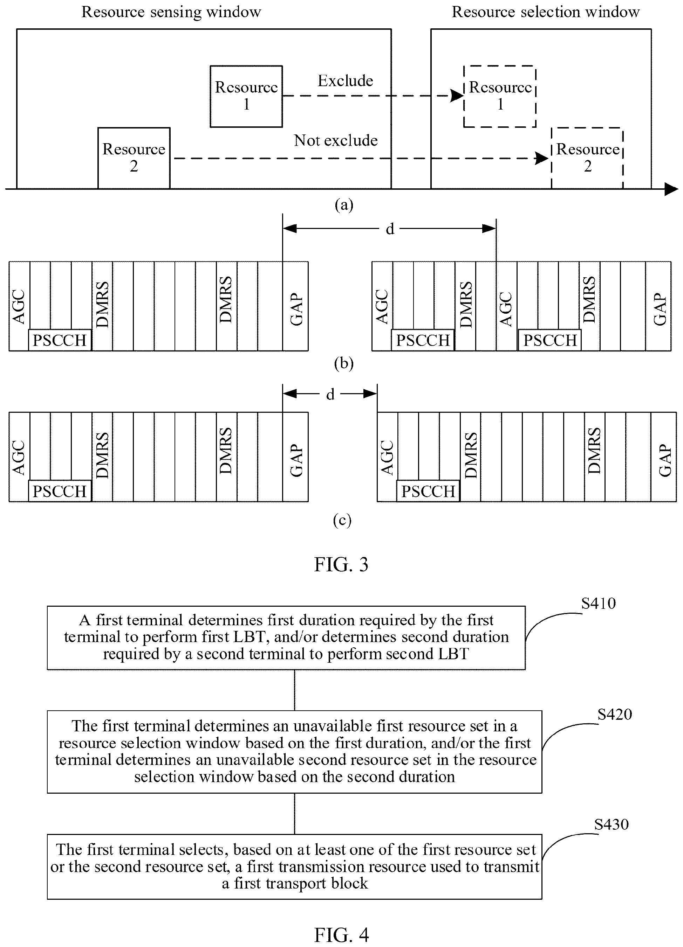

(b) and (c) in FIG. 3 each are a diagram of a time domain interval between two resources;

FIG. 4 is a schematic flowchart of a resource selection method according to an embodiment of this application;

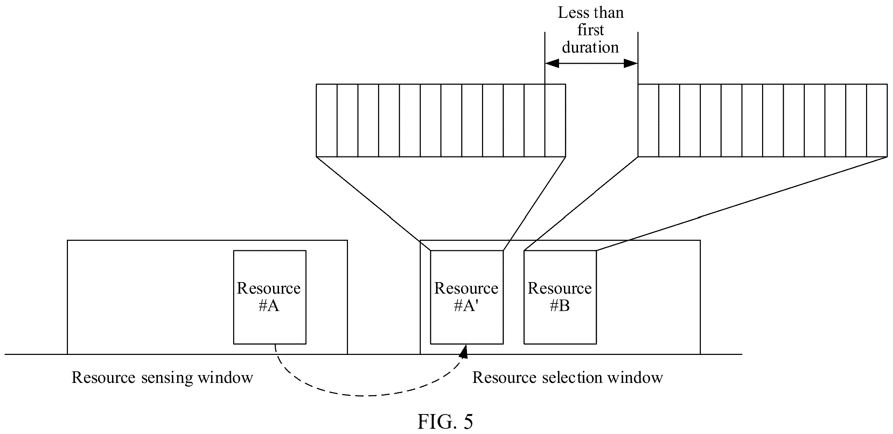

FIG. 5 is a diagram of resource exclusion according to an embodiment of this application;

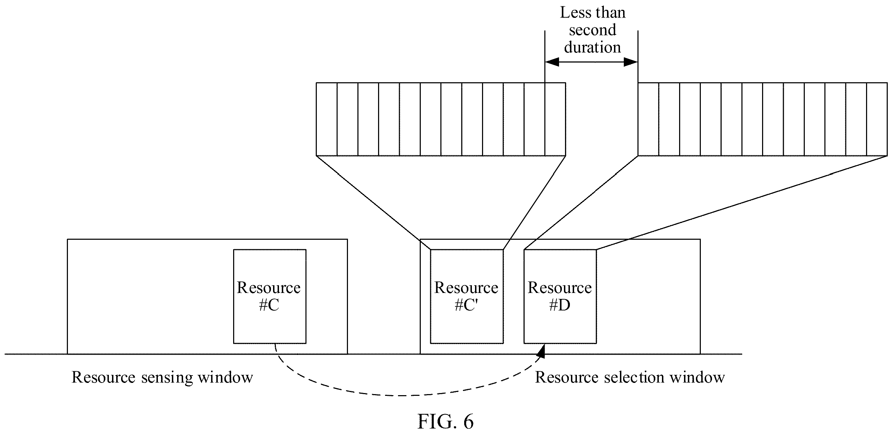

FIG. 6 is another diagram of resource exclusion according to an embodiment of this application;

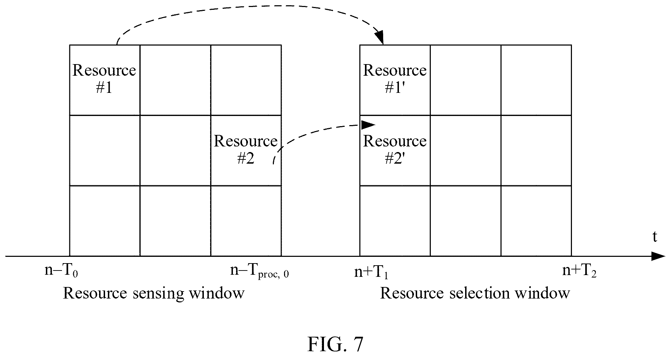

FIG. 7 is a diagram of a resource sensing window and a resource selection window according to an embodiment of this application;

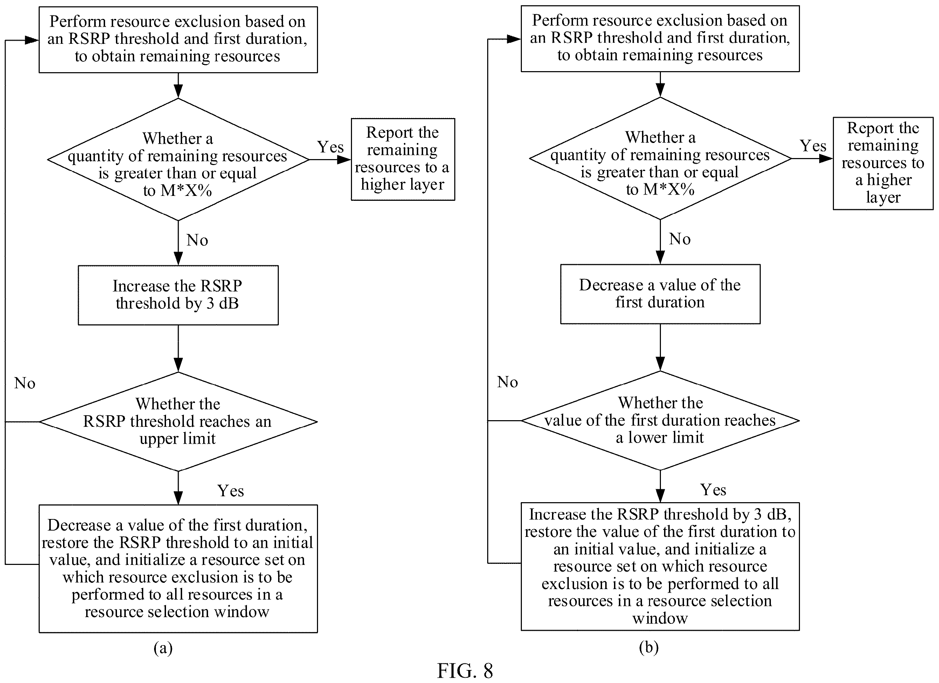

(a) and (b) in FIG. 8 are schematic flowcharts of resource selection according to an embodiment of this application;

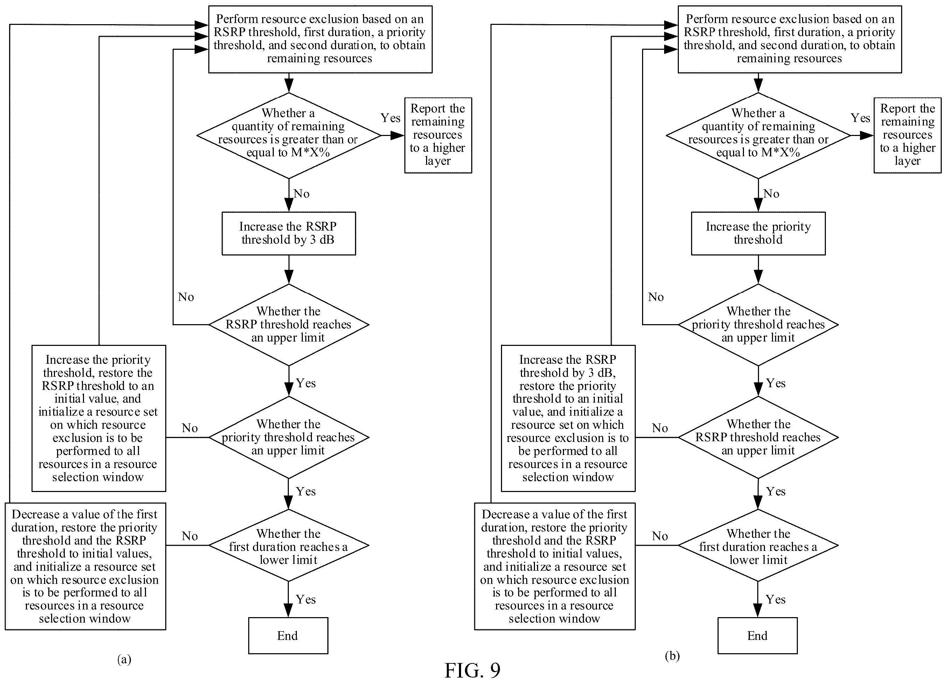

(a) and (b) in FIG. 9 are schematic flowcharts of resource selection according to an embodiment of this application;

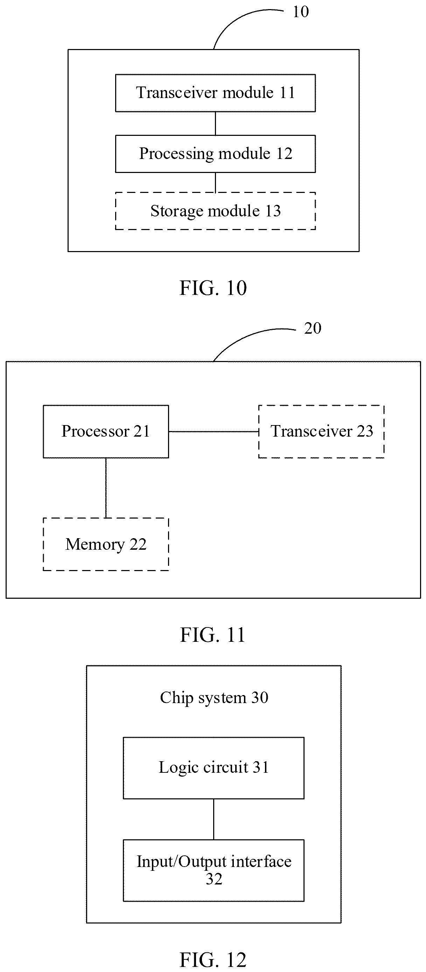

FIG. 10 is a block diagram of a communication apparatus 10 according to an embodiment of this application;

FIG. 11 is a diagram of a communication apparatus 20 according to an embodiment of this application; and

FIG. 12 is a diagram of a chip system 30 according to an embodiment of this application.

## DESCRIPTION OF EMBODIMENTS

The following describes technical solutions of embodiments in this application with reference to accompanying drawings.

The technical solutions of this application may be applied to various scenarios in which terminal apparatuses communicate with each other, for example, a sidelink on unlicensed spectrum (sidelink on unlicensed spectrum, SL-U) communication scenario, a device to device (device to device, D2D) scenario, a vehicle to everything (vehicle to everything, V2X) scenario, and a machine type communication (machine type communication, MTC)/machine to machine (machine to machine, M2M) communication scenario.

The terminal apparatus may be, for example, a terminal device, or a module configured to implement a function of the terminal device, for example, a chip or a chip system. The chip or the chip system may be disposed in the terminal device.

The terminal device may also be referred to as user equipment (user equipment, UE), a mobile station (mobile station, MS), a mobile terminal (mobile terminal, MT), or the like, and is a device that provides a user with voice and/or data connectivity. For example, the terminal device may include a handheld device, a vehicle-mounted device, or the like that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, an XR device, an MR device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device in embodiments of this application may alternatively be an access terminal, a mobile device, a user terminal, a terminal, or a wireless communication device.

The terminal device in this application may be a device that has a wireless receiving/sending function and that can provide a communication service for a user. Specifically, the terminal device may be a device in an SL-U system, a device in a V2X system, a device in a D2D system, a device in an MTC system, or the like. For example, the terminal may be an industrial robot, an industrial automation device, user equipment (user equipment, UE), an access terminal, a subscriber unit, a subscriber station, a mobile station, a mobile console, a remote station, a remote terminal, a mobile device, a user terminal, a wireless terminal, a mobile terminal, a customer premise equipment (customer premise equipment, CPE), a vehicle-mounted terminal, a user agent, a user apparatus, a terminal in virtual reality, a terminal in augmented reality, a terminal in remote medical, a terminal in a smart grid, a terminal in smart furniture, a terminal in smart office, a terminal in smart wear, a terminal in smart transportation, a terminal in a smart city, or the like. For another example, the terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5th generation (5th generation, 5G) network or a network after 5G, or a terminal in a future evolved communication network.

The terminal device in this application may alternatively be various types of terminal devices that perform communication on an unlicensed spectrum, for example, a device in a wireless fidelity (wireless fidelity, Wi-Fi) scenario (which is briefly referred to as Wi-Fi UE below), a device in a Bluetooth scenario (which is briefly referred to as Bluetooth UE below), or a device in a zigbee (zigbee) scenario (which is briefly referred to as ZigBee UE below).

A specific technology and a specific device form that are used by the terminal device are not limited in embodiments of this application.

A network apparatus in this application may also be referred to as a network device, and is a device that provides access for the terminal apparatus. The network device may include a radio access network (radio access network, RAN) device, for example, a base station. The network device may alternatively be a device that communicates with the terminal device over an air interface. The network device may include an evolved NodeB (evolved NodeB), which may be briefly referred to as an eNB or an e-NodeB, in an LTE system or a long term evolution-advanced (long term evolution-advanced, LTE-A) system. The eNB is an apparatus that is deployed in a radio access network, that meets a fourth generation (the fourth generation, 4G) mobile communication technology standard, and that provides a wireless communication function for the terminal device. The network device may alternatively be a new radio controller (new radio controller, NR controller), may be a gNodeB (gNodeB, gNB) in a 5G system, may be a central unit (central unit), may be a new radio base station, may be a remote radio unit, may be a micro base station (also referred to as a small cell), may be a relay (relay), may be a distributed unit (distributed unit), may be macro base stations in various forms, or may be a transmission reception point (transmission reception point, TRP), a transmission measurement function (transmission measurement function, TMF), a transmission point (transmission point, TP), or any other radio access device. Embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a radio remote unit (remote radio unit, RRU), a wireless fidelity (wireless fidelity, Wi-Fi) access point (access point, AP), a baseband pool (BBU pool) and an RRU in a cloud radio access network (cloud radio access network, CRAN), or the like. A specific technology and a specific device form that are used by the network device are not limited in embodiments of this application. For example, the network device may correspond to the eNB in a 4G system, and correspond to the gNB in the 5G system.

In this application, the network apparatus may alternatively be a central processing unit (central processing element, CPE), a router, or the like.

In this application, the network apparatus may alternatively be a function module, a chip, or a chip system. Optionally, the function module, the chip, or the chip system may be disposed in the network apparatus.

In the descriptions of embodiments of this application, a network device is used as an example for description. A specific technology and a specific device form that are used by the network device are not limited in this application. In addition, the network device may not be included in embodiments of this application.

The following mainly describes the technical solutions of this application by using an SL-U communication scenario as an example.

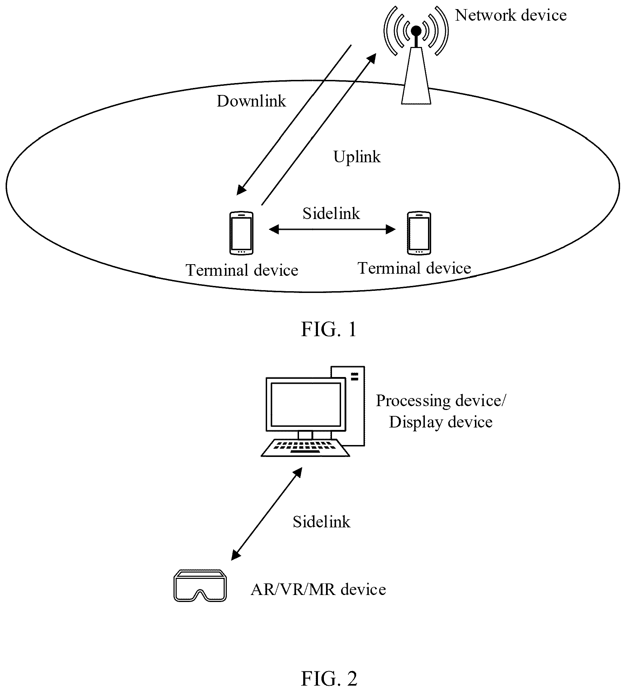

FIG. 1 and FIG. 2 are diagrams of communication systems applicable to this application;

As shown in FIG. 1, a terminal device for communication may be, for example, a mobile phone. A link for communication between the terminal device and a network device includes an uplink and a downlink, and a link for communication between terminal devices is a sidelink.

As shown in FIG. 2, a terminal device of one party in communication may be, for example, a virtual reality (virtual reality, VR) device, an augmented reality (augmented reality, AR) device, or a hybrid reality (mixed reality, MR) device, and a terminal device of the other party in communication may be, for example, a processing device or a display device.

It should be understood that a specific form of the terminal device is not specially limited in embodiments of this application, and is merely an example for description herein.

It should be further understood that a type of the terminal device is not limited in this application. For example, the terminal device may be SL UE, Wi-Fi UE, Bluetooth UE, or ZigBee UE. For ease of description, the following mainly uses an example in which the terminal device is the SL UE for description.

It should be further understood that FIG. 1 and FIG. 2 are merely simplified diagrams illustrated for ease of understanding, and do not constitute any limitation on the protection scope of this application. For example, the communication system may further include another terminal device, which is not shown in FIG. 1 and FIG. 2.

It should be noted that scenarios described in this application are intended to describe the technical solutions in this application more clearly, and do not constitute a limitation on the technical solutions in this application. A person of ordinary skill in the art may know that as a new service scenario emerges, the technical solutions provided in embodiments in this application are also applicable to similar technical problems.

For ease of understanding, the following describes nouns, terms, or technologies in this application.

1. Resource: The resource is a time-frequency resource in a resource pool. A time domain resource may be represented by a symbol (symbol), a slot (slot), a mini-slot (mini-slot), a partial slot (partial slot), a subframe (subframe), a radio frame (radio frame), a sensing slot (sensing slot), or the like.

A frequency domain resource may be represented by a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlace (interlace), or the like.

2. Resource pool: NR SL communication is performed based on the resource pool (resource pool). The resource pool is a block of time-frequency resources used for SL communication. Frequency domain resources included in the resource pool are consecutive. Time domain resources included in the resource pool may be consecutive or inconsecutive. Different resource pools are distinguished by SL resource pool identifiers (for example, SL-ResourcePoolID).

In an SL-U communication scenario, a frequency band is shared by UEs in a plurality of forms. For example, UE using an SL technology (which is briefly referred to as SL UE below), Wi-Fi UE, and Bluetooth UE perform transmission on a same frequency band. Therefore, the SL resource pool may also be understood as a set of resources that can be used for SL transmission.

3. LBT or channel access: In an LBT mechanism, before accessing a channel and starting to send data, UE needs to sense (sense) whether the channel is idle (idle). If the channel has been kept idle for a specific period of time, the UE can occupy the channel. If the channel is not idle, the UE can occupy the channel only after the channel is restored to idle. A reason why the LBT mechanism becomes a mandatory feature of an unlicensed frequency band is that each region in the world has a regulation (Regulation) requirement on use of the unlicensed frequency band. UEs in various forms operating in different communication protocols can use the unlicensed frequency band only when regulations are met, to fairly and efficiently use spectrum resources.

For an unlicensed spectrum of FR1, before transmission, the UE needs to perform LBT on each 20 MHz channel, and the 20 MHz channel may be referred to as an LBT channel. To avoid interference between different channels, the UE cannot send data on the entire 20 MHz bandwidth, but reserves a part of frequency band resources as a guard band (guard band), and sends the data only on a remaining part of frequency domain resources. This part of available resources is referred to as a resource block set (RB set). When the UE performs LBT operations on a plurality of consecutive 20 MHz channels and successfully accesses the channel, a guard band between two RB sets may be used to transmit data, thereby improving resource utilization.

The LBT includes type 1 (type1) LBT and type 2 (type2) LBT. The type 1 LBT is backoff-based LBT, a backoff time is related to a channel access priority class (Channel Access Priority Class, CAPC), and access can be performed only when a channel is idle for a long time. A frequency-domain unit for performing channel access is an LBT channel.

The following describes two types of LBT.

Type 1 channel access (type 1 channel access):

The type 1 channel access may also be referred to as the type 1 LBT. Two parts are included: channel sensing with a length of $T_d$ (defer duration) and cyclic sensing.

Channel sensing with the length of $T_d$ includes one $T_f$=16 $\mu$s and subsequent consecutive $m_p$ $T_{sl}$=9 $\mu$s, that is, $T_d = T_f + m_p \times T_{sl}$. A sensing time of $T_f$ is 9 $\mu$s at the beginning, and when all sensing times of $T_d$ are idle, cyclic sensing is entered. For a value of $m_p$, refer to Table 1. $CW_{min,\ p} \le CW_p \le CW_{max,\ p}$ is a contention window (contention window), and $T_{cot,\ p}$ is a maximum length of a COT.

Cyclic sensing is a cyclic process based on a counter N, and includes the following steps.

Step 1: Set N=Ninit, where Ninit is a random number whose value ranges from 0 to $CW_p$. Then, go to step 4.

Step 2: If N>0, UE decreases a counter value, and sets N=N-1.

Step 3: Sense a channel (sense the channel) in a sensing slot (an additional sensing slot duration), and if a sensing result is idle (idle), go to step 4; or if the sensing result is not idle, go to step 5.

Step 4: If N=0, stop; or if N≠0, go to step 2.

Step 5: Sense the channel until it is sensed that a sensing slot (sensing slot) in $T_d$ is busy (busy), or until all sensing slots in $T_d$ are idle.

Step 6: If all the sensing slots in $T_d$ are idle, go to step 4; or if not all the sensing slots in $T_d$ are idle, go to step 5.

It should be understood that, in this application, the counter N may also be referred to as an LBT counter N.

For example, Table 1 shows parameter values related to channel access.

**Table 1**

| CAPC | $m_p$ | $CW_{min, p}$ | $CW_{max, p}$ | $T_{cot, p}$ | Allowed $CW_p$ size (allowed $CW_p$ sizes) |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

Type 2 channel access (type 2 channel access or type 2 SL channel access)

The type 2 channel access includes three types: a type 2A, a type 2B, and a type 2C. The type 2 LBT requires a channel to be idle for only a short time (for example, 16 μs or 25 μs), so that the UE can access the channel. The type 2 LBT is mainly used during COT sharing, and has a corresponding execution condition. For example, UE with an initial COT and UE sharing the COT have a transmitting/receiving relationship.

The following separately describes the foregoing type 2A, type 2B, and type 2C.

Type 2A channel access: UE immediately performs transmission after sensing that a channel is idle in at least a sensing interval $T_{short}$=25 μs. Specifically, $T_{short}$=25 μs includes one sensing slot with $T_f$=16 μs and one sensing slot with $T_{sl}$=9 μs. If the two sensing slots are both idle, the channel is considered to be idle.

Type 2B channel access: UE immediately performs transmission after sensing that a channel is idle in $T_f$=16 μs. Specifically, channel sensing occurs in last 9 μs of $T_f$, and a channel sensing time is not less than 5 μs. If it is sensed that the channel is idle for more than 4 μs, it is considered that the channel is idle.

Type 2C channel access: UE performs transmission without performing channel sensing, and a maximum transmission time is 584 μs.

It should be understood that, regardless of the type 1 LBT or the type 2 LBT, whether the channel is idle is determined through energy detection. If resources corresponding to two transport blocks are close in time domain, and belong to a same channel in frequency domain, a transport block earlier in terms of time may cause an LBT failure of a transport block later in terms of time, and consequently the transport block cannot be sent. In this application, this phenomenon may be referred to as inter-UE blocking (inter-UE blocking), and the phenomenon causes a failure of sending the transport block by the UE.

In addition, it can be learned from the foregoing description that the type 1 LBT requires a long time, and is more prone to cause inter-UE blocking. Therefore, this application mainly focuses on inter-UE blocking associated with the type 1 LBT.

4. A relationship between a resource pool and a channel is as follows: The resource pool includes at least one LBT channel. For example, the resource pool includes one LBT channel, a channel bandwidth is 20 MHz, and a resource pool bandwidth is 20 MHz. For another example, the resource pool includes two LBT channels, a channel bandwidth is 20 MHz, and a resource pool bandwidth is 40 MHz. For another example, the resource pool includes five LBT channels, a channel bandwidth is 20 MHz, and a resource pool bandwidth is 100 MHz.

Different time-frequency resources corresponding to different transport blocks in this application belong to a same LBT channel in frequency domain, or belong to subordinate LBT channels that have an intersection.

5. Priority (L1-priority): A priority value is carried in SCI of a scheduling shared channel (PSSCH). There is a correspondence between a priority level and the priority value. In an SL, a higher priority level corresponds to a lower priority value, or it may be understood as that a lower priority value represents a higher priority. In this application, an example in which the higher priority level corresponds to the lower priority value is used for description.

6. Unlicensed spectrum (unlicensed spectrum): According to the Regulations on Radio Frequency Allocation of the People's Republic of China, frequency bands are allocated to fully, reasonably, and effectively use radio spectrum resources, ensure normal operating of radio services, and prevent mutual interference between radio services, radio stations, and systems. Technologies such as 2G/3G/4G/5G use licensed spectra, which need to be applied for by telecom operators before being used, and are characterized by low interference and security.

Technologies such as Wi-Fi, Bluetooth, and ZigBee use unlicensed spectra, which are intended to serve as supplementary tools for operators to enhance services of the operators. Unlicensed spectra can be used for communication without application and are free of charge. Communication on an unlicensed spectrum needs to comply with some regulations, for example, listen before talk (listen-before-talk, LBT) and occupied channel bandwidth (occupied channel bandwidth, OCB) requirements, to ensure fairness in channel access of various types of UEs running on the spectrum. SL communication on an unlicensed spectrum may be referred to as SL-U. Wi-Fi UE, Bluetooth UE, and Zigbee UE may be collectively referred to as inter-system UE relative to SL UE.

7. Channel occupancy (channel occupancy, CO) and channel occupancy time (channel occupancy time, COT)

A channel is a group of consecutive resource blocks (RB) on which a channel access process is performed on an unlicensed spectrum. It may be understood as that the channel is a bandwidth used by UE to perform channel access.

Channel occupancy refers to transmission performed by UE on one or more channels after the UE performs the channel access process.

After performing type 1 channel access, the UE occupies a channel in a continuous period of time to transmit information, and this continuous period of time is referred to as the channel occupancy time. A frequency-domain unit of the COT is a channel, and a time-domain unit of the COT is ms or a slot. In this application, the COT may be a time concept, that is, a time in which a channel is occupied by SL continuous transmission; or may be a frequency domain concept, that is, a channel occupied by SL transmission. In this application, if no further differentiation is made, the COT and the CO may be a same concept.

It should be understood that UE may transmit information on a plurality of adjacent or non-adjacent channels. In this application, that UE transmits information on a plurality of channels may be understood as that the UE occupies one COT to transmit the information, and the COT occupies a plurality of channels in frequency domain.

The COT may be shared (COT sharing) for information transmission between UEs. UE with an initial COT may share the COT with another UE, to be specific, used for SL transmission of the another UE. The UE with the initial COT and the UE sharing the COT occupy a channel in a continuous period of time to perform transmission. COT sharing needs to meet a corresponding condition. For example, the UE with the initial COT is receive UE or transmit UE of the UE sharing the COT. For another example, the UE with the initial COT and the UE sharing the COT are members in a same group. The condition that needs to be met by COT sharing is not limited in the present invention.

A time for the UE to transmit information cannot exceed a limit of a maximum channel occupancy time (maximum channel occupancy time, MCOT), which is denoted as $T_{cot,\,p}$. For different CAPCs, values of $T_{cot,\,p}$ are different, as shown in Table 1 and Table 2. For a case in which one UE accesses a channel and transmits information in a COT, a transmission time does not exceed the maximum channel occupancy time $T_{cot,\,p}$. For a case in which a plurality of UEs transmit information in a COT, a transmission time of UE with an initial COT and UE sharing the COT does not exceed the maximum channel occupancy time $T_{cot,\,p}$, where p is a CAPC of the UE with the initial COT, or p is a CAPC with a minimum CAPC value in UE that performs transmission in the COT.

8. Unlicensed spectrum sharing: An unlicensed spectrum resource may be shared between different user equipments, that is, a network device can receive and send information by using the spectrum provided that the network device complies with a specific regulation. If user equipment obtains a sending opportunity through LBT, a time length corresponding to the sending opportunity during which information can be continuously sent is referred to as a channel occupancy time (channel occupancy time, COT). After obtaining the COT, the user equipment may share a resource in the COT with another user equipment, and send the resource shared that is in the COT and that includes a corresponding time domain location and a corresponding frequency domain location to the another user equipment. After receiving the shared information, the another user equipment may send information on a specified time-frequency resource.

In addition, a device used in a D2D technology is generally a half-duplex device, that is, the UE can only receive information or send information at a same moment, and does not have a capability of simultaneously receiving and sending information.

9. SL operating mode: In an SL communication scenario of R16, modes for determining, for UE, a resource used to transmit SL information include a mode 1 (mode 1) and a mode 2 (mode 2). In the mode 1, a resource used by the UE to transmit the SL information may be scheduled by a base station. In the mode 2, the UE may select, from a resource pool through resource sensing and resource selection, a resource that can be used to transmit the SL information.

Because most of service sending and receiving parties during SL communication are terminal devices, the mode 2 in which no scheduling is performed by a network device better complies with service logic. Therefore, in this application, SL communication in the mode 2 is mainly considered.

10. Resource selection: In an SL communication system in the mode 2, a terminal device spontaneously performs resource sensing and resource selection (or resource reservation), to determine a time-frequency resource occupied by a transport block (transmit Block, TB).

A method in which UE performs resource sensing and resource selection may include the following steps.

Step 1: The UE senses a resource, that is, performs resource sensing in a resource sensing window by decoding a physical sidelink control channel (physical sidelink control channel, PSCCH) and measuring a reference signal received power (reference signal received power, RSRP) value.

Step 2: The UE determines, based on a resource sensing result in the resource sensing window through comparison with an RSRP threshold and an RSRP measurement value, whether to exclude a resource from the resource selection window, to form a candidate resource set.

(a) in FIG. 3 is a diagram of an example of a method in which UE excludes a resource from a resource selection window based on a sensing result.

For example, in the resource sensing window, if an RSRP measurement value obtained through measurement on a resource 1 is greater than an RSRP threshold, a resource that falls into the resource selection window and that is in a reserved resource indicated by SCI in the resource 1 is excluded. For another example, in the resource sensing window, if an RSRP measurement value of a resource 2 is less than an RSRP threshold, a resource that falls into the resource selection window and that is in a reserved resource indicated by SCI in the resource 2 is not excluded. The RSRP threshold is related to a priority indicated by the SCI and a priority of a to-be-transmitted PSSCH.

The reserved resource may be understood as a resource that is prespecified for UE or occupied by the UE (for example, UE #1) and that is used by the UE (for example, the UE #1) to subsequently send information, so that another UE (for example, UE #2) can exclude the reserved resource from a resource selection window of the UE (for example, the UE #2) based on a resource sensing result.

After resource exclusion ends, a physical layer checks whether a quantity of remaining available resources is greater than or equal to M*X%, where M is a quantity of all resources in the resource selection window, and X% is a pre-agreed percentage, such as 20%, 35%, or 50%. If the quantity of remaining available resources is less than M*X%, the RSRP threshold is increased by 3 dB, and the foregoing procedure is repeated until the quantity of remaining available resources is greater than or equal to M*X%. The physical layer reports the remaining available resources in the resource selection window to a MAC layer, and the MAC layer randomly selects a to-be-sent resource from the available resources. The remaining available resources in the resource selection window may be understood as a candidate resource set.

Step 3: The UE selects, from the candidate resource set, a resource that can be used to transmit SL information. Specifically, it may be considered that a higher layer (for example, the MAC layer) of the UE selects a resource used for transmission from the candidate resource set.

Step 4: When a specific condition is met, for example, the reserved resource of the UE overlaps a reserved resource of another UE, and a reselection counter counts down to 0, the UE triggers resource reselection.

11. Interval between two time-frequency resources in time domain:

In an implementation, the interval (denoted as d) between the two time-frequency resources in time domain is a slot interval between physical slots in which the two time-frequency resources are located. For example, if an earlier time-frequency resource is located in a physical slot 0, and a later time-frequency resource is located in a physical slot 2, an interval between the two time-frequency resources is 2-0=2 slots. The earlier time-frequency resource may be a candidate resource, and the later time-frequency resource may be a reserved time-frequency resource; or the earlier time-frequency resource is a reserved time-frequency resource, and the later time-frequency resource is a candidate time-frequency resource.

Optionally, in another implementation, the interval (denoted as d) between the two time-frequency resources in time domain may be understood as an interval between a last symbol (for example, a gap (GAP) symbol) of the earlier time-frequency resource in time domain and a first start symbol (for example, a start (AGC) symbol) of the later time-frequency resource in time domain.

Optionally, in another implementation, d depends on whether two start symbols are configured for the later time-frequency resource. If the later time-frequency resource has two start symbols, the interval between the two time-frequency resources in time domain is a time length from the last GAP symbol of the earlier time-frequency resource to a second start symbol of the later time-frequency resource, as shown in (b) in FIG. 3. It can be learned from (b) in FIG. 3 that a time-frequency resource includes a start (AGC) symbol, a PSCCH, a demodulation reference signal (Demodulation reference signal, DMRS), and a gap (GAP) symbol.

In addition, when the later time-frequency resource has one start symbol, the interval between the two time-frequency resources in time domain is a time length from the last GAP symbol of the earlier time-frequency resource to a first start symbol of the later time-frequency resource, as shown in (c) in FIG. 3.

In addition, to facilitate understanding of embodiments of this application, the following several descriptions are provided.

First, in this application, the term "indicate" may include a direct indication and an indirect indication. When a piece of indication information is described as indicating A, the indication information may directly indicate A or indirectly indicate A, but it does not necessarily indicate that the indication information includes A.

Information indicated by the indication information is referred to as to-be-indicated information. In a specific implementation process, there are a plurality of manners for indicating the to-be-indicated information. The to-be-indicated information may be sent as a whole, or may be divided into a plurality of pieces of sub-information for separate sending. In addition, sending periods and/or sending occasions of these pieces of sub-information may be the same or may be different. A specific sending method is not limited in this application. The sending periods and/or the sending occasions of these pieces of sub-information may be predefined, for example, predefined according to a protocol, or may be configured by a transmit end device by sending configuration information to a receive end device.

Second, "at least one" shown in this application means one or more, and "a plurality of" means two or more. In addition, in embodiments of this application, "first", "second", and various numerical numbers (for example "#1" and "#2") are merely used for differentiation for ease of description, and are not used to limit the scope of embodiments of this application. Sequence numbers of the following processes do not mean execution sequences. The execution sequences of the processes should be determined based on functions and internal logic of the processes, and should not be construed as any limitation on the implementation processes of embodiments of this application. It should be understood that objects described in such a manner are interchangeable in proper cases, so as to describe solutions other than embodiments of this application. In addition, in embodiments of this application, words such as "510", "610", and "810" are merely identifiers for ease of description, and do not limit a sequence of performing steps.

Third, in this application, the word "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

Fourth, "save" in embodiments of this application may mean that saved in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the "protocol" in embodiments of this application may refer to standard protocols in the communication field, for example, may include an LTE protocol, an NR protocol, and a related protocol applied to a future communication system. This is not limited in this application.

Sixth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

Seventh, in embodiments of this application, "of (of)", "corresponding (corresponding, relevant)", "corresponding (corresponding)", and "associate (associate)" may be interchangeably used sometime. It should be noted that, when a difference between the terms is not emphasized, meanings to be expressed are consistent.

With reference to FIG. 1 and FIG. 2, the foregoing briefly describes the scenario to which the resource selection method provided in embodiments of this application can be applied, describes the basic concepts that may be used in embodiments of this application, and describes the current resource selection manner in the basic concepts. It can be learned from the foregoing that the current resource selection manner has the following problems.

In an SL-U communication scenario, an LBT requirement needs to be complied with, or in other words, channel access needs to be performed, to ensure fairness in channel access of various types of UEs. In other words, after a transmit resource is determined, the UE starts LBT at a moment before the transmit resource. If the LBT is performed successfully before the transmit resource, sending may be performed on the selected resource; or if the LBT fails to be performed before the transmit resource, resource reselection needs to be performed.

However, in a current SL communication scenario of R16, impact of the LBT on resource selection is not considered during resource selection. Because a MAC layer randomly selects an available resource, if the resource is selected as a time-frequency resource that is close to a time-frequency resource corresponding to a transport block of another UE in time domain and that is located on a same LBT channel with the time-frequency resource corresponding to the transport block of the another UE in frequency domain, there is a high probability that the time-frequency resource cannot be used (for example, the LBT fails to be performed), and consequently the UE fails to send the transport block. In addition, the failure in sending the transport block by the UE may further cause frequent resource reselection, thereby increasing overheads of the UE.

To resolve a problem existing in the current resource selection manner, this application provides a resource selection method. Impact of LBT on resource selection is considered in a resource selection process, to increase a probability of successfully performing the LBT before a determined resource, thereby increasing a probability that UE successfully sends a transport block on the resource. In addition, frequent resource reselection of the UE caused by the LBT failure is avoided, and overheads of the UE are reduced.

It should be understood that the resource selection method provided in embodiments of this application may be applied to an SL communication system, for example, the communication system shown in FIG. 1 and/or FIG. 2. The communication system may include at least two terminal devices, and the terminal devices communicate with each other by using an SL communication technology.

It should be further understood that a specific structure of an execution body of the method provided in embodiments of this application is not specifically limited in embodiments, provided that communication can be performed according to the method provided in embodiments of this application by running a program that records code of the method provided in embodiments of this application. For example, the execution body of the method provided in embodiments of this application may be a terminal device, or may be a functional module that can invoke a program and execute the program in the terminal device.

The following describes in detail the resource selection method provided in embodiments of this application by using an example in which a terminal device performs resource selection.

FIG. 4 is a schematic flowchart of a resource selection method according to an embodiment of this application. The method includes the following steps.

S410: A first terminal determines first duration required by the first terminal to perform first LBT, and/or determines second duration required by a second terminal to perform second LBT.

It can be learned from the foregoing that this application is mainly for resource selection in an SL-U communication scenario. The first terminal is any SL UE that performs resource selection in the SL-U communication scenario. For example, the first terminal has a to-be-transmitted first TB. Before transmitting the first TB, the first terminal needs to select, from a resource pool, a resource that can be used to transmit the first TB. The second terminal may be any terminal that communicates with the first terminal. In addition, the second terminal may alternatively not communicate with the first terminal. This is not limited in this embodiment. In addition, the second terminal and the first terminal may also be a same terminal.

The first terminal performs communication on an unlicensed spectrum. Therefore, the first terminal needs to comply with a channel listening mechanism. In this embodiment, an example in which the channel listening mechanism is LBT is used. Specifically, in a process of performing resource selection in this embodiment, the first terminal may consider the first duration required by the first terminal to perform the first LBT, to avoid a failure in performing the first LBT before a selected resource.

In addition, in the process of performing resource selection in this embodiment, the first terminal may consider the second duration required by the second terminal to perform the second LBT, to avoid a case in which the second terminal fails to perform the second LBT before a resource because the first TB is transmitted on the selected resource.

It should be understood that, in this embodiment, the first terminal may determine duration required by at least one terminal to perform LBT. For ease of description, an example in which the first terminal may determine the second duration required by the second terminal to perform the second LBT is used for description. For a process in which the first terminal determines duration required by another terminal to perform LBT, refer to the process in which the first terminal determines the second duration required by the second terminal to perform the second LBT. Details are not described again.

Specifically, the foregoing step S410 includes the following several manners:

Manner 1: The first terminal determines the first duration required by the first terminal to perform the first LBT.

Specifically, in the manner 1, it may be understood as that the first terminal considers, in the resource selection process, a case in which another transport block blocks a transport block to be transmitted by the first terminal. In other words, in the resource selection process, the first terminal needs to consider the first duration required by the first terminal to perform the LBT, to avoid a case in which the first terminal fails to perform the LBT before a resource used to transmit the first TB due to transmission of a transport block of the second terminal.

It can be learned from the foregoing description that a purpose of performing resource selection by the first terminal is to transmit the first TB. Therefore, the first duration required by the first terminal to perform the first LBT may be understood as duration required for performing the first LBT related to transmitting the first TB. In other words, if resource selection is currently performed for transmitting another TB (for example, a TB #1), the first terminal determines that duration required by the first terminal to perform LBT (for example, LBT #1) may not be the first duration, or may be the first duration. This is not limited in this application.

It should be noted that the first duration may be duration required by the first terminal to perform the LBT, or may be other duration. For example, the first duration may be duration reserved for the first terminal to perform the first LBT. The first duration is not necessarily duration in which the first terminal performs the LBT, but may be maximum duration in which the first terminal performs the LBT (for example, duration estimated via a contention window (contention window, CW)) or a part of duration (for example, $T_d$) in which the first terminal performs the LBT, or may be a predefined or preconfigured fixed value.

In a possible implementation, the first terminal may estimate the first duration in the following manner.

The first terminal determines, based on a CAPC corresponding to a first transport block, a specific parameter (for example, the parameter listed in Table 1) for performing the LBT by the first terminal, and learns, based on a counter N randomly obtained via the contention window (Contention Window, CW), that a duration required by the first terminal to perform the first LBT (for example, type 1 LBT) without being interrupted by an inter-system satisfies the following formula:

$$t_0 = T_f + m_p * 9\,us + N * 9\,us = 16\,us + (m_p + N) * 9\,us$$

$t_0$ indicates the duration required by the first terminal to perform the LBT without being interrupted by the inter-system.

It should be understood that the first terminal may perform the LBT before resource selection. Therefore, N in the foregoing formula may also be a remaining number in the counter. A specific time for performing the LBT and a sequence of the time and a time for triggering resource selection are not limited in this application.

In consideration of interference from the inter-system (such as Wi-Fi) in an environment, a duration required by the first terminal to actually perform the type 1 LBT may be longer than the foregoing $t_0$. For example, the first terminal may estimate, based on $t_0$, that a duration required by the first terminal to perform the first LBT is $t_{LBT} = f(t_0)$, for example, $t_{LBT} = Y * t_0 + Z$.

It should be understood that, to reserve a sufficient time for the first terminal to perform the type 1 LBT, the estimated value $t_{LBT}$ of the first terminal may be long. In another possible implementation, the first terminal may receive, from another device (for example, a management device), information indicating the first duration. For example, the management device configures, for the first terminal based on a communication capability of the first terminal, corresponding first duration required for performing the LBT.

In still another possible implementation, the first terminal may determine the first duration based on historical communication data.

It should be understood that how the first terminal determines a value of the first duration is not limited in this embodiment. The foregoing several implementations are merely examples, and do not constitute any limitation on the protection scope of this application.

In still another possible implementation, the first terminal may determine the first duration based on a CW value, for example, determine the first duration based on a minimum CW value, or determine the first duration based on a maximum CW value, or determine the first duration based on any CW corresponding to the CAPC. For example, $t_0 = T_f + m_p * 9 \ us + CW * 9 \ us = 16 \ us + (CW + N) * 9 \ us,$ and $t_{LBT} = f(t_0)$.

In still another possible implementation, the first duration is $T_d$, and $T_d = 16 \ us + m_p * 9 \ \mu s$.

In addition, the first duration in this embodiment may be predefined/preconfigured. For example, the first duration is one slot or two slots. Alternatively, the first duration is predefined/preconfigured in a unit of $\mu s$. For example, the first duration is 169 $\mu s$. When a CAPC value is 2, 169 $\mu s$ is maximum LBT duration corresponding to transmission whose CAPC is less than or equal to 2 and the transmission is not blocked by other transmission. In addition, when a value of the first duration is predefined/preconfigured as one slot or two slots, corresponding duration is greater than 169 $\mu s$. In conclusion, in the foregoing predefined/pre-configuration manner, LBT duration may be reserved for transmission whose CAPC value is less than or equal to 2 to some extent.

Manner 2: The first terminal determines the second duration required by the second terminal to perform the second LBT.

Specifically, in the manner 2, it may be understood that, in the resource selection process, the first terminal considers a case in which the first terminal blocks the second terminal. In other words, in the resource selection process, the first terminal needs to consider the second duration required by the second terminal to perform the LBT, to avoid adverse impact caused by transmitting the first TB by the first terminal on the selected resource on performing the LBT by the second terminal (for example, the second terminal fails to perform the LBT before a resource due to transmission of the first TB).

It should be noted that the second duration may be duration required by the second terminal to perform the LBT, or may be other duration. For example, the second duration may be duration reserved for the second terminal to perform the second LBT. The second duration is not necessarily duration in which the second terminal performs the LBT, but may be maximum duration in which the second terminal performs the LBT (for example, duration estimated via a CW) or a part of duration (for example, $T_d$) in which the second terminal performs the LBT, or may be a predefined or preconfigured fixed value.

In a possible implementation, the first terminal may determine, based on a CAPC value included in a received transport block, the second duration required by the second terminal to perform the LBT, where the transport block is sent by the second terminal.

For example, when the second terminal sends the transport block, the CAPC value is carried in SCI, so that the first terminal can infer, based on the CAPC value, a duration required by the second terminal to perform the LBT. For example, the transport block is carried in a shared channel, and the shared channel is associated with the SCI. In other words, the SCI is SCI that is used to schedule the shared channel carrying the transport block. In this embodiment, the transport block may be replaced with the shared channel. In addition, the CAPC value may also be carried in a MAC CE. A manner for carrying the CAPC value is not limited in this application.

Optionally, to enable another terminal to infer the duration required by the first terminal to perform the LBT, the first terminal may also carry the CAPC value when sending the transport block.

For ease of understanding, the following uses an example to describe a manner in which the first terminal determines the second duration required by the second terminal to perform the LBT.

The first terminal determines, based on the CAPC value carried in the transport block sent by the second terminal in a resource sensing window, a specific parameter (for example, the parameter listed in Table 1) for performing the LBT by the second terminal, and estimates, based on a size of a contention window (Contention Window, CW), that a duration required by the second terminal to perform the LBT (for example, type 1 LBT) without being interrupted by an inter-system satisfies the following formula:

$$t_1 = T_f + m_p * 9\,us + CW * 9\,us = 16\,us + (m_p + CW) * 9\,us$$

The CW value may be a minimum CW or a maximum CW corresponding to the CAPC value, or any CW corresponding to the CAPC value. This is not limited in the present invention.

In consideration of interference from the inter-system (such as Wi-Fi) in an environment, a duration required by the second terminal to actually perform the type 1 LBT may be longer than the foregoing $t_1$. In addition, because the foregoing time is estimated via the contention window, a duration required by the second terminal to actually perform the type 1 LBT may also be shorter than the foregoing $t_1$. The first terminal may estimate, based on $t_1$, that a duration required by the second terminal to perform the LBT is $t'_{LBT} = f(t_1)$, for example, $t'_{LBT} = U * t_1 + V$.

In another possible implementation, the first terminal may receive, from another device (for example, a management device), information indicating the second duration. For example, the management device configures, for the second terminal based on a communication capability of the second terminal, corresponding second duration required for performing the LBT.

In still another possible implementation, the first terminal may determine the second duration based on historical communication data.

In still another possible implementation, the second duration is $T_d$, and $T_d = 16\,us + m_p * 9\,\mu s$.

In addition, the second duration in this embodiment may be predefined/preconfigured. For example, the second duration is one slot, two slots, or several fixed $\mu s$, for example, 169 $\mu s$. Predefined/preconfigured logic is similar to that of the first duration. Details are not described herein again.

Manner 3: The first terminal determines the first duration required by the first terminal to perform the first LBT and the second duration required by the second terminal to perform the second LBT.

Specifically, for a manner in which the first terminal determines the first duration required by the first terminal to perform the first LBT, refer to the foregoing manner 1. For a manner in which the first terminal determines the second duration required by the second terminal to perform the second LBT, refer to the foregoing manner 2. Details are not described herein again.

Further, after the first terminal determines the first duration (for example, the foregoing manner 1 and/or manner 3) required by the first terminal to perform the first LBT, the first terminal may determine a first resource set in a resource selection window based on the first duration, and first resource set may also be referred to as a first unavailable resource. The first unavailable resource occupies N consecutive slots in time domain. When the first duration is several predefined/preconfigured slots (for example, one slot or two slots), N is correspondingly equal to 1 or 2. When the first duration is in another case, the first terminal may determine a value of N by itself. The following provides some examples of how the first terminal calculates N.

After the first terminal determines the second duration (for example, the foregoing manner 2 and/or manner 3) required by the second terminal to perform the second LBT, the first terminal may determine a second resource set in the resource selection window based on the second duration, and second resource set may also be referred to as a second unavailable resource. The second unavailable resource occupies N consecutive slots in time domain. When the second duration is several predefined/preconfigured slots (for example, one slot or two slots), N is correspondingly equal to 1 or 2. When the second duration is in another case, the first terminal may determine a value of N by itself. The following provides some examples of how the first terminal calculates N.

The method procedure shown in FIG. 4 further includes the following step.

S420: The first terminal determines the first resource set in the resource selection window based on the first duration, and/or the first terminal determines the second resource set in the resource selection window based on the second duration.

Specifically, that the first terminal determines the first resource set in the resource selection window based on the first duration includes the following determining manner #1.

Determining manner #1: The first terminal determines a resource in the first resource set based on the first duration and a resource associated with a second transport block received in a first slot in a resource sensing window; and/or the first terminal determines the resource in the first resource set based on the first duration and a resource associated with a second slot that is not monitored in the resource sensing window.

In a possible implementation, received energy of the second transport block is greater than an energy threshold of LBT, and a channel occupied by the second transport block is incapable of being shared by the first transport block transmitted by the first terminal.

In this implementation, the first terminal may determine the second transport block based on the energy threshold of the LBT, to facilitate subsequent resource exclusion. It may be understood that impact of transmission on a subsequent resource associated with the second transport block whose received energy is greater than the energy threshold of the LBT on transmission of the first transport block is considered. In this implementation, a relationship between a value of RSRP of the second transport block and an RSRP threshold is not considered, and a relationship between the received energy and the energy threshold of the LBT is considered.

In another possible implementation, RSRP corresponding to the second transport block is greater than an RSRP threshold, and a channel occupied by the second transport block is incapable of being shared by the first transport block transmitted by the first terminal.

In this implementation, when determining the second transport block, the first terminal does not consider a relationship between received energy of the second transport block and an energy threshold of LBT, but considers a relationship between the RSRP and the RSRP threshold. The second transport block may be determined based on the RSRP threshold, to facilitate subsequent resource exclusion. It may be understood that impact of transmission on a subsequent resource associated with the second transport block whose RSRP is greater than the RSRP threshold on transmission of the first transport block is considered.

It should be understood that reference signal received power corresponding to the second transport block is obtained by measuring a demodulation reference signal (DMRS) reused on a same shared channel with the second transport block. The demodulation reference signal may be a demodulation reference signal (PSSCH-DMRS) of the shared channel, or may be a reference signal (PSCCH-DMRS) of a control channel that is used to schedule the shared channel. The control channel carries SCI that is used to schedule the shared channel. In this case, the RSRP threshold is a threshold used in existing R16 resource exclusion.

In this application, the energy threshold of the LBT is related to parameters such as an occupied bandwidth and maximum transmit power. For details, refer to a definition in a protocol. Details are not described herein again. A resource associated with a transport block may be understood as a resource reserved for the transport block. For example, the resource associated with the second transport block may be understood as a resource reserved for the second transport block. It should be understood that the second transport block is located on a shared channel PSSCH, the shared channel is associated with a control channel PSCCH, and the resource associated with the second transport block may be understood as a resource reserved for the PSCCH.

A part of resources that may be included in the first resource set and that are determined by the first terminal based on the first duration and the resource associated with the second transport block received in the first slot in the resource sensing window may be understood as a resource that is blocked by a resource used to transmit a transport block #1 and that is identified by the first terminal based on the transport block #1 received in the resource sensing window (for ease of description, referred to as a resource part #1 below).

In addition, the other part of resources that may be included in the first resource set and that are determined by the first terminal based on the first duration and the resource associated with the second slot that is not monitored in the resource sensing window may be understood as a resource that is blocked by a resource used to transmit a transport block #2 and that is identified when the first terminal does not perform resource sensing in the second slot in the resource sensing window (for example, the first terminal sends the transport block #2 in the second slot), the first terminal assumes that all time-frequency resources in a same resource pool in the second slot are occupied by the transport block #2, and a period of the transport block #2 is traversed among all periods supported in the resource pool (for ease of description, referred to as a resource part #2 below).

It can be learned from the foregoing that the resources that may be included in the first resource set may be classified into the foregoing resource part #1 and resource part #2. It should be understood that the first resource set may not include the resource part #2.

The following separately describes how the first terminal determines a resource included in the resource part #1 and how the first terminal determines a resource included in the resource part #2.

Specifically, that the first terminal determines the resource included in the resource part #1 includes the following steps.

Step 1: The first terminal receives the second transport block in the first slot in the resource sensing window, and determines that energy of the second transport block is greater than an energy threshold of the first LBT, and a channel occupied by the second transport block cannot be shared.

In another implementation, the first terminal receives the second transport block in the first slot in the resource sensing window, and determines that RSRP corresponding to the second transport block is greater than an RSRP threshold, and a channel occupied by the second transport block cannot be shared.

Step 2: The first terminal determines the resource part #1 based on the first duration and a resource corresponding to the second transport block.

For example, the first terminal determines a second resource in the first resource set based on the first duration and a first resource associated with the second transport block. The second resource is later than the first resource in time domain, an interval between the second resource and the first resource in time domain is less than or equal to the first duration, and the second resource and the first resource are located on a same LBT channel in frequency domain. The second resource is any resource included in the resource part #1, and the first resource is a resource corresponding to the second transport block. The interval between the first resource and the second resource has been explained above. Details are not described herein again.

It should be noted that, in the determining manner #1, the first terminal determines the first resource set in the resource selection window based on the first duration, and the first duration may be determined by the first terminal based on the CAPC corresponding to the first transport block (as described in the manner 1 in step S410, and details are not described herein again). However, if the CAPC value corresponding to the first transport block is large, estimated first duration is long, and a quantity of resources in the first resource set is easily to be insufficient. Therefore, to ensure that the quantity of resources in the first resource set determined in the determining manner #1 is sufficient, in this embodiment, that if the CAPC value corresponding to the first transport block meets a first preset condition, the resources in the first resource set are determined according to the determining manner #1; or if the CAPC value corresponding to the first transport block does not meet the first preset condition, the resources in the first resource set may be determined according to the resource exclusion procedure defined in the current protocol may be limited. The CAPC value corresponding to the first transport block meets the first preset condition. For the first preset condition, refer to the foregoing description.

For ease of understanding, a procedure in which the first terminal determines the resource included in the resource part #1 is described with reference to a specific example (for example, the following Example 1).

Example 1: In a possible implementation, it is assumed that the first terminal receives a transport block #A (for example, the second transport block) in a slot $t'^{SL}_m$ (for example, the first slot) in the resource sensing window. If received energy of the transport block #A exceeds an energy threshold of the first LBT, and a channel occupied by the transport block #A cannot be shared (for example, grant information indicating that the channel of the transport block #A can be shared is not received), the following operations are performed. In this implementation, a relationship between a value of RSRP of the transport block #A and an RSRP threshold is not considered, and a relationship between the received energy and the energy threshold of the LBT is considered.

In another implementation, it is assumed that the first terminal receives a transport block #A (for example, the second transport block) in a slot $t'^{SL}_m$ (for example, the first slot) in the resource sensing window. If RSRP corresponding to the transport block #A is calculated and it is learned that the calculated RSRP exceeds an RSRP threshold, and a channel occupied by the transport block #A cannot be shared (for example, grant information indicating that the channel of the transport block #A can be shared is not received), the following operations are performed. In this implementation, when determining the transport block #A, the first terminal does not consider a relationship between received energy of the transport block #A and an energy threshold of LBT, but considers a relationship between the RSRP and the RSRP threshold. A transmission period $P'_{rsvp\_RX}$ of the transport block #A is known by demodulating SCI corresponding to the transport block #A. Therefore, it may be assumed that same pieces of SCI are received on a series of time-frequency resources that are located in slots $t'^{SL}_{m+q \times P'_{rsvp\_RX}}$ in time domain and that are the same as a resource occupied by the transport block #A in frequency domain. Resources indicated in the foregoing pieces of SCI may be referred to as time-frequency resources associated with the transport block #A, where q=0, 1, 2, ..., and Q (a value of Q may reuse that in 38.214, that is, Q is $\dfrac{T_2}{P'_{rsvp\_RX}}$ or 1, where $T_2$ indicates duration of the resource selection window).

For a candidate resource $R_{x,y}$ in the resource selection window, a series of time-frequency resources $R_{x,y+j \times P'_{rsvp\_TX}}$ associated with the candidate resource are also checked, where $j$=0, 1, ..., and $C_{resel}$ - 1.

If the following condition is met, $R_{x,y}$ is a resource in the resource part #1.

If a time-frequency resource associated with the transport block #A in the slot $t'^{SL}_{m+q \times P'_{rsvp\_RX}}$ and a time-frequency resource $R_{x,y+j \times P'_{rsvp\_TX}}$ are located on a same channel, the time-frequency resource associated with the transport block #A in the slot $t'^{SL}_{m+q \times P'_{rsvp\_RX}}$ is earlier in time domain, and a distance between the two does not exceed $t_{LBT}$, the time-frequency resource $R_{x,y}$ is the resource in the resource part #1. $R_{x,y}$ is prone to be blocked by a resource associated with the transport block #A.

In addition, if N consecutive slots need to be excluded, the first terminal may determine a value of N by itself.

In a possible implementation, N may be calculated from N1, and N1 may be calculated based on the first duration.

$$N1 = \left[\frac{t_{LBT} - t_{symbol} - m * t_{symbol}}{t_{slot}}\right] + 1$$

For example, , where $t_{LBT}$ is duration that is estimated by the first terminal and that is required by the first terminal to perform LBT before transmission, $t_{symbol}$ is duration of one symbol, $t_{slot}$ is duration of one slot, [] indicates rounding down, N1 is a quantity of physical slots, and N excluded consecutive logical slots are several consecutive logical slots that are in a resource pool and that are in N1 consecutive physical slots. Determining the consecutive logical slots from the consecutive physical slots depends on a configuration of the resource pool. In addition, if $t_{LBT} - t_{symbol} - m * t_{symbol} < 0$, N1 may be equal to 0, so that N is also equal to 0.

In addition, when a later time-frequency resource has two start symbols, a value of m is an index of a second start symbol; or when the later time-frequency resource has one start symbol, a value of m is an index of a first start symbol (the index of the symbol starts from 0).

$$N1 = \left[\frac{t_{LBT}}{t_{slot}}\right] + 1$$

The foregoing formula may be simplified as: .

In another possible implementation, N may be a predetermined value. For example, the first duration is actually a quantity of predefined/preconfigured slots. For example, the first duration is one slot or two slots.

For ease of understanding, description is provided with reference to FIG. 5. FIG. 5 is a diagram of a resource included in a resource part #1 according to an embodiment of this application. It can be learned from FIG. 5 that, a resource #A in a resource sensing window is a resource for receiving a transport block #A, and a resource #A' in a resource selection window is a time-frequency resource associated with the transport block #A. In other words, another terminal may perform subsequent transmission on the resource #A'. It can be learned from the foregoing definition of inter-UE blocking that "a transport block earlier in terms of time may cause an LBT failure of a transport block later in terms of time", and LBT of a resource #B that is later than the resource #A' in time domain and that has short duration with the resource #A' may fail, so that the resource #B is the resource included in the resource part #1.

In addition, another resource included in the resource part #1 may also be determined in the foregoing manner. Details are not described herein again.

It should be understood that, a last symbol in a transport block in an SL is reserved for receiving/sending conversion, and is not used for signal transmission. Therefore, a distance between two time-frequency resources in time domain does not exceed $t_{LBT}$. This may be explained as that duration from a last symbol of an earlier time-frequency resource to a first symbol of a later time-frequency resource does not exceed $t_{LBT}$.

Specifically, that the first terminal determines the resource included in the resource part #2 includes the following steps.

Step 1: The first terminal does not monitor the second slot in the resource sensing window. For example, the first terminal sends a fourth transport block in the second slot in the resource sensing window.

It should be understood that the first terminal may alternatively not monitor the second slot in the resource sensing window due to another reason. For example, the first terminal does not perform monitoring due to reasons such as temporary disconnection. For ease of description, an example in which the first terminal sends the fourth transport block in the second slot in the resource sensing window is used for description.

Step 2: The first terminal determines the resource part #2 based on the first duration and the resource associated with the second slot that is not monitored in the resource sensing window.

For example, the first terminal determines a fourth resource in the first resource set based on the first duration and a third resource associated with the second slot that is not monitored.

For example, the first terminal excludes the fourth resource based on the third resource and the first duration. The fourth resource is later than the third resource in time domain, an interval between the fourth resource and the third resource in time domain is less than or equal to the first duration, and the fourth resource and the third resource are located on a same LBT channel in frequency domain. The fourth resource is any resource included in the resource part #2.

For example, the interval between the third resource and the fourth resource in time domain may be understood as an interval between a last symbol of the third resource and a first symbol of the fourth resource (for example, a second start symbol of the fourth resource when the fourth resource has two start symbols; for another example, a first start symbol of the fourth resource when the fourth resource has one start symbol). The third resource is a reserved time-frequency resource, and the fourth resource is a candidate time-frequency resource that may need to be excluded.

For ease of understanding, a procedure in which the first terminal determines the resource included in the resource part #2 is described with reference to a specific example (for example, the following Example 2).

Example 2: It is assumed that the first terminal sends a transport block #B (for example, the fourth transport block) in a slot $t''^{SL}_m$ (for example, the second slot) in the resource sensing window. Due to half-duplexing, the first terminal cannot simultaneously perform receiving and sending in one slot. In this case, the first terminal cannot receive the transport block in the slot $t''^{SL}_m$ and cannot demodulate control information corresponding to the transport block. In this case, according to the logic in 38.214, it should be assumed that all time-frequency resources in a same resource pool in the slot $t''^{SL}_m$ are occupied by the transport block #B, and a period of the transport block #B is traversed among all periods supported in the resource pool. In other words, a time-frequency resource that needs to be considered is located in $t''^{SL}_{m+q \times P''_{rsvp}}$ in time domain, and occupies all frequency domain resources in the resource pool in frequency domain, q=0, 1, 2, ..., and Q, and $P''_{rsvp}$ is traversed among all the periods supported in the resource pool (a value of Q may reuse that in 38.214, that is, Q is $\frac{T_2}{P''_{rsvp}}$ or 1).

In addition, for a candidate resource $R1_{x,y}$ in the resource selection window, a series of time-frequency resources associated with the candidate resource are still $R1_{x,y+j \times P''_{rsvp\_TX}}$, where j=0, 1, ..., and $C_{resel}$ - 1. If the following condition is met, $R1_{x,y}$ is a resource in the resource part #2.

If a time-frequency resource in the slot $t''^{SL}_{m+q \times P'_{rsvp\_RX}}$ and a time-frequency resource $R1_{x,y+j \times P''_{rsvp\_TX}}$ are located on a same channel, the time-frequency resource in the slot $t''^{SL}_{m+q \times P'_{rsvp\_RX}}$ is earlier in time domain, and a distance between the two does not exceed $t_{LBT}$, the time-frequency resource $R1_{x,y}$ is the resource in the resource part #2. $R1_{x,y}$ is prone to be blocked by a time-frequency resource associated with the transport block #B.

Specifically, that the first terminal determines the second resource set in the resource selection window based on the second duration includes the following determining manner #2.

Determining manner #2: The first terminal determines a resource in the second resource set based on the second duration and a resource associated with a third transport block received in a third slot in the resource sensing window; and/or the first terminal determines the resource in the second resource set based on the second duration and the resource associated with the second slot that is not monitored in the resource sensing window, where a priority of the third transport block is greater than a priority threshold, and the third transport block is incapable of sharing a channel occupied by the to-be-transmitted first transport block.

For example, RSRP corresponding to the third transport block is greater than an RSRP threshold. It may be understood that impact of the third transport block whose RSRP is greater than the RSRP threshold on transmission of the first transport block is considered.

A part of resources that may be included in the second resource set and that are determined by the first terminal based on the second duration and the resource associated with the third transport block received in the third slot in the resource sensing window may be understood as some resources that are blocked by a resource used to transmit a transport block #1 and that are identified by the first terminal based on the transport block #1 received in the resource sensing window (for ease of description, referred to as a resource part #3 below).

In addition, the other part of resources that may be included in the second resource set and that are determined by the first terminal based on the second duration and the resource associated with the second slot that is not monitored in the resource sensing window may be understood as a resource that is blocked by a resource used to transmit a transport block #2 and that is identified when the first terminal does not perform resource sensing in the second slot in the resource sensing window (for example, the first terminal sends a transport block in the second slot), the first terminal assumes that all time-frequency resources in a same resource pool in the second slot are occupied by the transport block #2, and a period of the transport block #2 is traversed among all periods supported in the resource pool (for ease of description, referred to as a resource part #4 below).

It can be learned from the foregoing that the resources that may be included in the second resource set may be classified into the foregoing resource part #3 and resource part #4. The following separately describes how the first terminal determines a resource included in the resource part #3 and how the first terminal determines a resource included in the resource part #4. It should be understood that the second resource set may not include the resource part #4.

Specifically, that the first terminal determines the resource included in the resource part #3 includes the following steps.

Step 1: The first terminal receives the third transport block in the third slot in the resource sensing window, and determines that the priority of the third transport block is greater than the priority threshold, and the third transport block is incapable of sharing the channel occupied by the to-be-transmitted first transport block.

Step 2: The first terminal determines the resource part #3 based on the second duration and a resource corresponding to the third transport block.

For example, the first terminal determines a sixth resource in the second resource set based on the second duration and a fifth resource associated with the third transport block. The sixth resource is earlier than the fifth resource in time domain, an interval between the sixth resource and the fifth resource in time domain is less than or equal to the second duration, and the sixth resource and the fifth resource are located on a same LBT channel in frequency domain. The sixth resource is any resource included in the resource part #3, and the fifth resource is a resource corresponding to the third transport block.

For example, the interval between the fifth resource and the sixth resource in time domain may be understood as an interval between a last symbol of the sixth resource and a first symbol of the fifth resource (for example, a second start symbol of the fifth resource when the fifth resource has two start symbols; for another example, a first start symbol of the fifth resource when the fifth resource has one start symbol). The fifth resource is a candidate time-frequency resource that may be excluded, and the sixth resource is a time-frequency resource reserved for a high-priority service.

It should be noted that, in the determining manner #2, the first terminal determines the second resource set in the resource selection window based on the second duration, and the second duration may be: second duration that is required by the second terminal to perform the LBT and that is determined by the first terminal based on the CAPC value included in the received transport block, and the transport block is sent by the second terminal (as described in the manner 2 in step S410, and details are not described herein again). However, if the CAPC value corresponding to the transport block sent by the second terminal is large, estimated second duration is long, and a quantity of resources in the second resource set is easily to be insufficient. Therefore, to ensure that the quantity of resources in the second resource set determined in the determining manner #2 is sufficient, in this embodiment, that if the CAPC value corresponding to the transport block sent by the second terminal meets a first preset condition, the resources in the second resource set are determined in the determining manner #2; or if the CAPC value corresponding to the transport block sent by the second terminal does not meet the first preset condition, the resources in the second resource set may be determined according to the resource exclusion procedure defined in the current protocol may be limited. That the CAPC value corresponding to the transport block sent by the second terminal meets the first preset condition includes but is not limited to: CAPC=1, and CAPC=1 or CAPC=2.

For ease of understanding, a procedure in which the first terminal determines the resource included in the resource part #3 is described with reference to a specific example (for example, the following Example 3).

Example 3: It is assumed that the first terminal receives a transport block #C (for example, the third transport block) in a slot $t1'^{SL}_m$ (for example, the third slot) in the resource sensing window. If it is calculated that a priority of the transport block #C is higher than a priority threshold, and the transport block #C cannot share a channel occupied by a to-be-transmitted first transport block, the following operations are performed.

A transmission period $P1'_{rsvp\_RX}$ of the transport block #C is known by demodulating SCI corresponding to the transport block #C. Therefore, it may be assumed that same pieces of SCI may be demodulated on a series of time-frequency resources that are located in slots $t1'^{SL}_{m+q \times P1'_{rsvp\_RX}}$ in time domain and that are the same as a resource occupied by the transport block #C in frequency domain. Time-frequency resources indicated in the foregoing pieces of SCI may be referred to as time-frequency resources associated with the transport block #C, where q=1, 2, ..., and Q (a value of Q may reuse that in 38.214, that is, Q is $\frac{T_2}{P1'_{rsvp\_RX}}$ or 1; or optionally, a value of Q is $\frac{T_2 + t1'^{SL}_m}{P1'_{rsvp\_RX}}$ or 1, where $T_2$ indicates duration of the resource selection window).

For a candidate resource $R2_{x,y}$ in the resource selection window, a series of time-frequency resources $R2_{x,y+j \times P1'_{rsvp\_TX}}$ associated with the candidate resource are also checked, where j=0, 1, ..., and $C_{resel}$ - 1.

If the following condition is met, $R2_{x,y}$ is a resource in the resource part #3:

If a time-frequency resource associated with the transport block #C in the slot $t1'^{SL}_{m+q \times P'_{rsvp\_RX}}$ and a time-frequency resource $R2_{x,y+j \times P1'_{rsvp\_TX}}$ are located on a same channel, the time-frequency resource associated with the transport block #C in the slot $t1'^{SL}_{m+q \times P'_{rsvp\_RX}}$ is later in time domain, and a distance between the two does not exceed $t'_{LBT}$, the time-frequency resource $R2_{x,y}$ is the resource in the resource part #3. $R2_{x,y}$ is prone to block a resource associated with the transport block #C.

In addition, if N consecutive slots need to be excluded, N may be calculated by the first terminal itself.

In a possible implementation, N may be obtained based on N2, and N2 may be calculated based on the second duration.

$$N2 = \left[ \frac{t'_{LBT} - t_{symbol} - m * t_{symbol}}{t_{slot}} \right] + 1$$

For example, where $t'_{LBT}$ is duration that is estimated by the first terminal and that is required by the second terminal to perform LBT before transmission, $t_{symbol}$ is duration of one symbol, $t_{slot}$ is duration of one slot, [] indicates rounding down, N2 is a quantity of physical slots, N excluded consecutive logical slots are several consecutive logical slots that are in a resource pool and that are in N2 consecutive physical slots. Determining the consecutive logical slots from the consecutive physical slots depends on a configuration of the resource pool. In addition, when $t'_{LBT} - t_{symbol} - m * t_{symbol} < 0$, N2 may be equal to 0, so that N is also equal to 0.

In addition, when a later time-frequency resource has two start symbols, a value of m is an index of a second start symbol; or when the later time-frequency resource has one start symbol, a value of m is an index of a first start symbol (the index of the symbol starts from 0).

$$N2 = \left[ \frac{t'_{LBT}}{t_{slot}} \right] + 1$$

The foregoing formula may be simplified as: .

In another possible implementation, N may be a predetermined value. For example, the second duration is actually a quantity of predefined/preconfigured slots. For example, the second duration is one slot or two slots.

For ease of understanding, description is provided with reference to FIG. 6. FIG. 6 is a diagram of a resource included in a resource part #3 according to an embodiment of this application. It can be learned from FIG. 6 that, a resource #C in a resource sensing window is a resource for receiving a transport block #C, and a resource #C' in a resource selection window is a time-frequency resource associated with the transport block #C. In other words, another terminal may perform subsequent transmission on the resource #C'. It can be learned from the foregoing definition of inter-UE blocking that "a transport block earlier in terms of time may cause an LBT failure of a transport block later in terms of time", and transmission on a resource #D that is earlier than the resource #C' in time domain and that has short duration with the resource #C' may cause a failure in performing LBT before the resource #C', so that the resource #D is the resource included in the resource part #3.

In addition, another resource included in the resource part #3 may also be determined in the foregoing manner. Details are not described herein again.

It should be understood that, a last symbol in a transport block in an SL is reserved for receiving/sending conversion, and is not used for signal transmission. Therefore, a distance between two time-frequency resources in time domain does not exceed $t'_{LBT}$. This may be explained as that duration from a last symbol of an earlier time-frequency resource to a first symbol of a later time-frequency resource does not exceed $t'_{LBT}$.

Specifically, that the first terminal determines the resource included in the resource part #4 includes the following steps.

Step 1: The first terminal does not monitor the second slot in the resource sensing window. For example, the first terminal sends a fourth transport block in the second slot in the resource sensing window.

It should be understood that the first terminal may alternatively not monitor the second slot in the resource sensing window due to another reason. For example, the first terminal does not perform monitoring due to reasons such as temporary disconnection. For ease of description, an example in which the first terminal sends the fourth transport block in the second slot in the resource sensing window is used for description.

Step 2: The first terminal determines the resource part #4 based on the second duration and the resource associated with the second slot that is not monitored in the resource sensing window.

For example, the first terminal determines a seventh resource in the second resource set based on the second duration and a third resource associated with the second slot that is not monitored.

For example, the first terminal determines the seventh resource based on the second duration and the third resource associated with the slot that is not monitored. The seventh resource is earlier than the third resource in time domain, an interval between the seventh resource and the third resource in time domain is less than or equal to the second duration, and the seventh resource and the third resource are located on a same LBT channel in frequency domain. The seventh resource is any resource included in the resource part #4, and the third resource is a resource associated with a slot that is not monitored.

For example, the interval between the third resource and the seventh resource in time domain may be understood as an interval between a last symbol of the seventh resource and a first symbol of the third resource.

For ease of understanding, a procedure in which the first terminal determines the resource included in the resource part #4 is described with reference to a specific example (for example, the following Example 4).

Example 4: It is assumed that the first terminal sends a transport block #B (for example, the fourth transport block) in a slot $t''^{SL}_m$ (for example, the second slot) in the resource sensing window. Due to half-duplexing, the first terminal cannot simultaneously perform receiving and sending in one slot. In this case, the first terminal cannot receive the transport block in the slot $t''^{SL}_m$ and cannot demodulate control information corresponding to the transport block. In this case, according to the logic in 38.214, it should be assumed that all time-frequency resources in a same resource pool in the slot $t''^{SL}_m$ are occupied by the transport block #B, and a period of the transport block #B is traversed among all periods supported in the resource pool. In other words, a time-frequency resource that needs to be considered is located in $t''^{SL}_{m+q\times P''_{rsvp}}$ in time domain, and occupies all frequency domain resources in the resource pool in frequency domain, q=1, 2, ..., and Q, and $P''_{rsvp}$ is traversed among all the periods supported in the resource pool (a value of Q may reuse that in 38.214, that is, Q is $\frac{T_2}{P''_{rsvp}}$ or 1; or optionally, a value of Q is $\frac{T_2+t''^{SL}_m}{P''_{rsvp}}$ or 1).

In addition, for a candidate resource $R3_{x,y}$ in the resource selection window, a series of time-frequency resources associated with the candidate resource are still $R3_{x,y+j\times P''_{rsvp\_TX}}$, where j=0, 1, ..., and $C_{resel}$ - 1. If the following condition is met, $R3_{x,y}$ is a resource in the resource part #4.

If a time-frequency resource in the slot $t''^{SL}_{m+q\times P'_{rsvp\_RX}}$ and a time-frequency resource $R3_{x,y+j\times P''_{rsvp\_TX}}$ are located on a same channel, the time-frequency resource in the slot $t''^{SL}_{m+q\times P'_{rsvp\_RX}}$ is later in time domain, and a distance between the two does not exceed $t_{LBT}$, the time-frequency resource $R3_{x,y}$ is the resource in the resource part #4. $R3_{x,y}$ is prone to be blocked by a time-frequency resource associated with the transport block #B.

It should be understood that the first terminal cannot learn of a CAPC value associated with this part of resources. Therefore, the first terminal can only estimate one $t_{LBT}$ based on the UE. Because $t_{LBT}$ is not easy to be estimated in this case, the second resource set may not include the resource part #4.

With reference to the determining manner #1 and the determining manner #2, the foregoing separately describes in detail how to determine the first resource set in the resource selection window based on the first duration and how to determine the second resource set in the resource selection window based on the second duration.

Further, after determining the first resource set and/or the second resource set, the first terminal may select, based on at least one of the first resource set or the second resource set, a first transmission resource used to transmit the first transport block. The method procedure shown in FIG. 4 further includes the following step.

S430: The first terminal selects, based on at least one of the first resource set or the second resource set, the first transmission resource used to transmit the first transport block.

In this embodiment, that the first terminal selects, based on at least one of the first resource set or the second resource set, the first transmission resource used to transmit the first transport block includes the following two manners.

Manner 1: That the first terminal selects the first transmission resource based on at least one of the first resource set or the second resource set includes: The first terminal excludes the first resource set from the resource selection window; and/or the first terminal excludes the second resource set from the resource selection window, to obtain a candidate resource set, and select the first transmission resource from the candidate resource set. It should be noted that, that the first transmission resource is selected from the candidate resource set is that the first terminal reports the candidate resource set to a MAC layer, and the MAC layer selects the first transmission resource from the candidate resource set.

In other words, the candidate resource set obtained by the first terminal is a candidate resource set obtained after the first terminal performs resource exclusion based on the first duration and/or the second duration.

Manner 2: That the first terminal selects the first transmission resource based on at least one of the first resource set or the second resource set includes: The first terminal selects the first transmission resource based on the candidate resource set and at least one of the first resource set or the second resource set. The candidate resource set is a candidate resource set obtained by the first terminal by performing resource exclusion according to the current resource exclusion method (for example, performing resource exclusion based on the RSRP threshold).

In the manner 2, the first terminal obtains the candidate resource set via a physical layer. Further, the first terminal reports at least one of the first resource set or the second resource set to a higher layer (for example, a MAC layer) of the first terminal via the physical layer. It may be understood that the first resource set and/or the second resource set are/is reported at the same time (or before or after) when the candidate resource set is reported.

For example, the first terminal may report the first unavailable resource and/or the second unavailable resource in a manner for reporting indication information indicating the first resource set and/or the second resource set.

It may be understood that a difference between the manner 1 and the manner 2 lies in the following. In the manner 1, in the process in which the first terminal performs resource selection, the first duration and/or the second duration are/is considered in the resource exclusion phase, and the obtained candidate resource set is the candidate resource set obtained after the first terminal performs resource exclusion based on the first duration and/or the second duration. However, in the manner 2, in the process in which the first terminal performs resource selection, although the resource exclusion method specified in the conventional technology is still used in the resource exclusion phase, after the resource exclusion is performed according to the conventional technology to obtain the candidate resource set, and when the candidate resource set is reported to the higher layer (for example, reported to the MAC layer) and the higher layer determines a resource that is finally used to transmit the first TB, the indication information may be reported to indicate the first resource set and/or the second resource set, to prevent the higher layer from selecting the resource in the first resource set and/or the resource in the second resource set. It should be understood that, the indication information may use a time domain resource indication (Time resource indication value, TRIV)/frequency domain resource indication (Frequency resource indication value, FRIV) to identify an unavailable resource. An indication manner of the indication information is not limited in this application.

How to determine the first resource set and/or the second resource set is described in detail above with reference to the determining manner #1 and the determining manner #2. However, in the foregoing manner 2, a specific manner for avoiding selecting the resource in the first resource set and/or the resource in the second resource set after the higher layer receives the indication information is not limited. For example, the indication information may include identification information of the resource in the first resource set and/or identification information of the resource in the second resource set. The higher layer of the first terminal may avoid selecting the resource indicated by the identification information included in the indication information. A specific selection process of the higher layer is not described herein again. The following mainly describes, in the manner 1, the resource exclusion manner in which the first terminal considers the first duration and/or the second duration in the resource exclusion process.

For example, in this embodiment, the first terminal may further consider the RSRP threshold in the resource exclusion process. For example, the first terminal excludes a third resource set from the resource selection window based on the RSRP threshold, where the RSRP threshold is a higher-layer parameter of the first terminal, and is preconfigured or configured.

Specifically, in this embodiment, resource exclusion performed by the first terminal based on the RSRP threshold is consistent with that in an existing protocol (step 6, section 8.1.4, 38.214). Details are not described in this application.

It can be learned from the foregoing that, in the manner 1, the first terminal considers the first duration and/or the second duration in the resource exclusion process, and the following exclusion manners are included.

Exclusion manner #1: The first terminal considers the first duration in the resource exclusion process.

It can be learned from the foregoing description that, the first resource set that is in the resource selection window and that is determined based on the first duration includes the resource part #1 and the resource part #2.

In a possible implementation, the first terminal may exclude only the resource part #1, but does not exclude the resource part #2. After the resource part #1 is excluded, a quantity of remaining resources is calculated. If the quantity of remaining resources is less than M*X%, the resource part #1 is not excluded.

In another possible implementation, the first terminal may exclude only the resource part #2, but does not exclude the resource part #1. After the resource part #2 is excluded, a quantity of remaining resources is calculated. If the quantity of remaining resources is less than M*X%, the resource part #2 is not excluded.

In still another possible implementation, the first terminal may first exclude the resource part #1, and calculate a quantity of remaining resources. If the quantity of remaining resources is less than M*X%, the resource part #1 and the resource part #2 are not excluded; or if the quantity of remaining resources is greater than or equal to M*X%, the resource part #2 is further excluded. If a quantity of remaining resources is less than M*X% after the resource part #2 is excluded, only the resource part #1 is excluded.

In still another possible implementation, the first terminal may first exclude the resource part #2, and calculate a quantity of remaining resources. If the quantity of remaining resources is less than M*X%, the resource part #1 and the resource part #2 are not excluded; or if the quantity of remaining resources is greater than or equal to M*X%, the resource part #1 is further excluded. If a quantity of remaining resources is less than M*X % after the resource part #1 is excluded, only the resource part #2 is excluded.

In still another possible implementation, the first terminal calculates a quantity of remaining resources after excluding the resource part #1 and the resource part #2. If the quantity of remaining resources is less than M*X%, the resource part #1 and the resource part #2 are not excluded.

The foregoing is merely an example for describing a possible implementation in which the first terminal considers the first duration in the resource exclusion process, and does not constitute any limitation on the protection scope of this application.

Exclusion manner #2: The first terminal considers the second duration in the resource exclusion process.

It can be learned from the foregoing description that, the second resource set that is in the resource selection window and that is determined based on the second duration includes the resource part #3 and the resource part #4.

In a possible implementation, the first terminal may exclude only the resource part #3, but does not exclude the resource part #4. After the resource part #3 is excluded, a quantity of remaining resources is calculated. If the quantity of remaining resources is less than M*X%, the resource part #3 is not excluded.

In another possible implementation, the first terminal may exclude only the resource part #4, but does not exclude the resource part #3. After the resource part #4 is excluded, a quantity of remaining resources is calculated. If the quantity of remaining resources is less than M*X%, the resource part #4 is not excluded.

In still another possible implementation, the first terminal may first exclude the resource part #3, and calculate a quantity of remaining resources. If the quantity of remaining resources is less than M*X%, the resource part #3 and the resource part #4 are not excluded; or if the quantity of remaining resources is greater than or equal to M*X%, the resource part #4 is further excluded. If a quantity of remaining resources is less than M*X% after the resource part #4 is excluded, only the resource part #3 is excluded.

In still another possible implementation, the first terminal may first exclude the resource part #4, and calculate a quantity of remaining resources. If the quantity of remaining resources is less than M*X%, the resource part #3 and the resource part #4 are not excluded; or if the quantity of remaining resources is greater than or equal to M*X%, the resource part #3 is further excluded. If a quantity of remaining resources is less than M*X % after the resource part #3 is excluded, only the resource part #4 is excluded.

In still another possible implementation, the first terminal calculates a quantity of remaining resources after excluding the resource part #3 and the resource part #4. If the quantity of remaining resources is less than M*X%, the resource part #3 and the resource part #4 are not excluded.

The foregoing is merely an example for describing a possible implementation in which the first terminal considers the second duration in the resource exclusion process, and does not constitute any limitation on the protection scope of this application.

Exclusion manner #3: The first terminal considers the first duration and the second duration in the resource exclusion process.

For example, the first terminal may exclude at least one of the resource part #1, the resource part #2, the resource part #3, and the resource part #4 in the resource exclusion process. For a specific exclusion manner, refer to the exclusion manner #1 and the exclusion manner #2. In other words, only one of the resource part #1, the resource part #2, the resource part #3, and the resource part #4 may be excluded; or one of the resource part #1, the resource part #2, the resource part #3, and the resource part #4 is first excluded, and whether further exclusion is required is determined based on whether a quantity of remaining resources after exclusion is greater than or equal to M*X%.

In addition, it can be learned from the foregoing that in the process in which the first terminal performs resource exclusion in this embodiment, resource exclusion may be further considered based on the RSRP threshold. Therefore, a manner in which the first terminal performs resource exclusion further includes: Exclusion manner #4: The first terminal considers the first duration and the RSRP threshold in the resource exclusion process.

It may be understood that the RSRP threshold is considered in the current resource selection process (for example, in resource selection described in the foregoing basic concepts, whether to exclude the resource from the resource selection window is determined through comparison with the RSRP threshold and the RSRP measurement value, to form the candidate resource set). In other words, in the exclusion manner #4, in the process of preforming resource exclusion, in addition to the RSRP threshold, the first terminal further considers the first duration required by the first terminal to perform the first LBT, to avoid resource reselection caused by an LBT failure after the resource is determined.

Specifically, the first terminal excludes the resource from the resource selection window based on the first duration and the RSRP threshold, to obtain a candidate resource set #1. A resource in the candidate resource set #1 is used by the first terminal to transmit the first transport block, and a quantity of resources included in the candidate resource set #1 is greater than or equal to M*X%, where M is a quantity of resources included in the resource selection window, and X% is a predefined percentage.

In this embodiment, after performing resource selection, the first terminal obtains the candidate resource set #1. The resource in the candidate resource set #1 is used by the first terminal to transmit the first transport block, and the quantity of resources included in the candidate resource set #1 is greater than or equal to M*X%, where M is the quantity of resources included in the resource selection window, and X% is the predefined percentage. The first transport block to be transmitted by the first terminal may be one or more transport blocks. A quantity of to-be-transmitted transport blocks is not limited in this embodiment.

For example, if a total quantity of resources included in the resource selection window is 100, and X% is 20%, the quantity of resources included in the candidate resource set #1 is greater than or equal to 20.

It should be understood that the total quantity of resources included in the resource selection window is not limited in this embodiment, and a specific value of X% is not limited either. X% may be a value specified in the existing protocol, for example, 20%, 35%, or 50%.

It should be noted that a manner for determining an initial resource included in the resource selection window is not limited in this embodiment. In other words, an initial resource set based on which the first terminal performs resource selection is not limited. This embodiment mainly considers how to exclude an inappropriate resource from the initial resource set to obtain a candidate resource set. For ease of description, in this embodiment, the initial resource set is referred to as a resource included in the resource selection window. It should be understood that the manner for determining the initial resource may refer to that in the existing protocol.

For example, that the first terminal determines a resource included in the resource selection window includes the following steps.

Step 1: The first terminal determines a resource selection window.

Step 2: The first terminal determines a resource sensing window.

For example, the first terminal determines a transmit resource in the resource selection window based on a detection result in the resource sensing window. As shown in FIG. 7, a time occupied by the resource sensing window is $[n-T_0, n-T_{proc, 0}]$, and a time occupied by the resource selection window is $[n+T_1, n+T_2]$. It can be learned from FIG. 7 that the transmit resource in the resource selection window may be determined based on the detection result in the resource sensing window. A resource #1 and a resource #2 are occupied resources in the resource sensing window, for example, resources used by other terminals to send transport blocks. It is determined, based on a periodic transmission manner of the transport block and locations of the resource #1 and the resource #2, that a resource #1' and a resource #2' in the resource selection window may be used by the other terminals to send the transport blocks, and therefore the resource #1' and the resource #2' are excluded from being used as transmit resources.

It can be learned from the foregoing that the transmit resource in the resource selection window may be determined based on the detection result in the resource sensing window. The foregoing process in which the first terminal performs resource selection based on the first duration and the RSRP threshold may also be understood as a process in which the transmit resource in the resource selection window is determined based on the detection result in the resource sensing window.

It should be understood that the manner for determining the duration occupied by the resource sensing window and the resource selection window is not limited in this embodiment, and a mechanism in the existing protocol may be directly reused. Details are not described herein again.

Step 3: The first terminal determines the RSRP threshold.

The RSRP threshold is represented as Th(prio_tx, prio_rx), where prio_tx is a priority of a transport block to be transmitted by the first terminal, and prio_rx is a priority of a transport block of another terminal (for example, the second terminal).

prio_rx may be determined by demodulating SCI of the transport block of the second terminal in the resource sensing window.

Step 4: The first terminal initializes the initial resource set to a set including all resources in the resource selection window.

For example, determining the resource included in the resource selection window further includes the following step.

Step 5: The first terminal excludes a resource that has a potential conflict caused because a slot is not monitored, and determines whether a quantity of remaining resources after exclusion is greater than or equal to M*X%; and if the quantity of remaining resources is less than M*X%, initializes the initial resource set to the set including all the resources in the resource selection window (that is, returns to step 4); or if the quantity of remaining resources is greater than or equal to M*X%, initializes the initial resource set to the remaining resource in the resource selection window.

It should be noted that the foregoing step 5 may be performed after the resource is excluded from the resource selection window based on the first duration and the RSRP threshold. In other words, resource exclusion is further performed for the candidate resource set #1, and whether a quantity of remaining resources after exclusion is greater than or equal to M*X% is determined. If the quantity of remaining resources is less than M*X%, the candidate resource set before exclusion is used as a final candidate resource set; or if the quantity of remaining resources is greater than or equal to M*X%, the candidate resource set after exclusion is used as a final candidate resource set.

It should be understood that the foregoing step 1 to step 4 (or step 5) are merely briefly described the process of determining the initial resource set. For a specific process of determining the initial resource set, refer to related records in the current protocol (for example, steps 1, 2, 3, and 4 in resource selection in section 8.1.4, 38.214). Details are not described herein again.

Optionally, the foregoing step S410 may be performed after step 4 (or step 5) is performed.

Specifically, that the first terminal performs resource exclusion based on the first duration and the RSRP threshold includes the following two implementations:

Implementation #1: The first terminal first performs resource exclusion based on the first duration, and then performs resource exclusion based on the RSRP threshold.

The first terminal first excludes a resource from the resource selection window based on the first duration, to obtain a resource set #1_1.

If a quantity of remaining resources after the first terminal excludes the resource from the resource selection window based on the first duration is greater than or equal to M*X%, a resource included in the resource set #1_1 is the remaining resource; or if the quantity of remaining resources after the first terminal excludes the resource from the resource selection window based on the first duration is less than M*X%, a resource included in the resource set #1_1 is a resource in the resource selection window.

In other words, in the implementation #1, in the process in which the first terminal performs resource exclusion based on the first duration, if the quantity of remaining resources after exclusion is less than M*X%, the resource in the resource selection window is reinitialized to a set including all resources (that is, a related resource is no longer excluded based on the first duration).

Then, the first terminal excludes a resource from the resource selection window based on the RSRP threshold, or excludes a resource from the resource set #1_1, to obtain the candidate resource set #1.

Implementation #2: The first terminal first performs exclusion based on the RSRP threshold, and then performs exclusion based on the first duration.

The first terminal excludes a resource from the resource selection window based on the RSRP threshold, to obtain a resource set #1_2, and a quantity of resources included in the resource set #1_2 is greater than or equal to M*X%;

The first terminal excludes a resource from the resource set #1_2 based on the first duration, to obtain the candidate resource set #1.

It should be understood that resource exclusion performed by the first terminal based on the RSRP threshold is consistent with that in an existing protocol (step 6, section 8.1.4, 38.214). Details are not described in this application.

In addition, that the first terminal performs resource exclusion based on the first duration may be understood as that the first terminal determines and excludes the resource in the first resource set based on the first duration. Specifically, a manner for determining the resource in the first resource set based on the first duration is described in detail above with reference to the determining manner #1. Details are not described herein again.

It should be understood that, in the foregoing implementation #1 and implementation #2, in the process in which the first terminal performs resource exclusion based on the first duration, the first duration is not adjusted. It can be learned from the existing resource selection process that the RSRP threshold based on which resource selection is performed may be adjusted (for example, when the quantity of remaining available resources is less than M*X%, the UE may increase the RSRP threshold by 3 dB, to perform resource reselection). In other words, in the process of performing resource selection based on the first duration, a value of the first duration may also be adjusted. The following describes, with reference to an implementation #3, how to adjust the value of the first duration and/or a value of the RSRP threshold.

Implementation #3: The first terminal performs resource selection based on the first duration and the RSRP threshold, and may adjust the value of the first duration and/or the value of the RSRP threshold.

Specifically, the first terminal may set an upper limit of the RSRP threshold (or a maximum value of the RSRP threshold), and in a process of updating the RSRP threshold, the upper limit of the RSRP threshold is not exceeded.

For example, the upper limit of the threshold may be set to infinity (infinity), to indicate that a resource corresponding to a transport block is not excluded regardless of RSRP of the transport block.

In a possible implementation, in this embodiment, the first terminal may set the upper limit of the RSRP threshold based on historical transmission data.

In another possible implementation, in this embodiment, the first terminal may receive, from another device (for example, a management device), information indicating the upper limit of the RSRP threshold.

It should be understood that, in this embodiment, how the first terminal determines the upper limit of the RSRP threshold is not limited. For example, the upper limit of the RSRP threshold may be selected as follows: When the first terminal performs resource selection by using the upper limit of the RSRP threshold according to only the resource selection method in R16, a quantity of remaining available resources is greater than M*X%.

Specifically, to avoid a case in which LBT fails to be performed before a resource in the candidate resource after resource selection, the first terminal sets a lower limit (or a minimum value of the first duration) of the first duration. For example, the lower limit of the first duration may be selected as follows: When the first terminal performs resource selection only by using the lower limit of the first duration, a quantity of remaining available resources is greater than M*X%.

For a process in which the first terminal performs resource selection based on the first duration and the RSRP threshold in the implementation #3, refer to the foregoing implementation #1 and implementation #2. Details are not described herein again. A difference lies in the following.

If the quantity of remaining resources is less than M*X% after the first terminal performs resource exclusion based on an initial RSRP threshold and initial first duration, the first terminal may adjust the value of the first duration and/or the value of the RSRP threshold, and performs resource reselection until a quantity of obtained remaining available resources is greater than or equal to M*X% after resource selection is performed based on the first duration and the RSRP threshold.

In a possible implementation, if a quantity of remaining resources is less than M*X% after the first terminal performs resource exclusion based on an initial RSRP threshold and an initial value of the first duration, the first terminal first increases the RSRP threshold by 3 dB, and then performs resource exclusion. If the quantity of remaining resources is still less than M*X% after the RSRP threshold is increased to the upper limit, the first terminal decreases the value of the first duration, restores the RSRP threshold to the initial value, and performs resource re-exclusion. It should be noted that resource re-exclusion is performed on all resources in the resource selection window. It may be understood that the resource is excluded from the resource selection window each time. In other words, when the first terminal decreases the value of the first duration and restores the RSRP threshold to the initial value, a resource set on which resource exclusion is to be performed needs to be initialized to a resource set including all resources in the resource selection window. The foregoing process is repeated until the quantity of remaining available resources is greater than or equal to M*X%. In this case, the physical layer reports the available resource to the MAC layer. For ease of understanding, with reference to (a) in FIG. 8, a procedure in which the first terminal performs resource selection in this implementation is described.

In another possible implementation, if a quantity of remaining resources is less than M*X% after the first terminal performs resource exclusion based on an initial RSRP threshold and an initial value of the first duration, the first terminal decreases the value of the first duration, and then performs resource exclusion. If the quantity of remaining resources is still less than M*X% after the quantity of remaining resources is reduced to the lower limit of the first duration, the first terminal increases the RSRP threshold by 3 dB, restores the value of the first duration to the initial value, and then performs resource selection. It should be noted that resource re-exclusion is performed on all resources in the resource selection window. It may be understood that the resource is excluded from the resource selection window each time. In other words, when the first terminal increases the RSRP threshold by 3 dB and restores the value of the first duration to the initial value, a resource set on which resource exclusion is to be performed needs to be initialized to a resource set including all resources in the resource selection window. The foregoing process is repeated until the quantity of remaining available resources is greater than or equal to M*X%. In this case, the physical layer reports the available resource to the MAC layer. For ease of understanding, with reference to (b) in FIG. 8, a procedure in which the first terminal performs resource selection in this implementation is described.

In still another possible implementation, if a quantity of remaining resources is less than M*X% after the first terminal performs resource exclusion based on an initial RSRP threshold and an initial value of the first duration, the first terminal may decrease the value of the first duration and increase the RSRP threshold by 3 dB, and then performs resource exclusion. The foregoing process is repeated until the quantity of remaining available resources is greater than or equal to M*X%. In this case, the physical layer reports the available resource to the MAC layer.

For example, there are many manners for reducing the LBT duration. For example, one or more slots are reduced each time, or one or more $\mu$s are reduced each time. A specific manner for reducing the first duration is not limited in this embodiment.

It should be understood that the foregoing is merely an example for describing how the first terminal performs resource reselection by updating the value of the first duration and the RSRP threshold, and does not constitute any limitation on the protection scope of this application. For example, an amount reduced in the first duration each time and an amount increased in the RSRP threshold each time may be other values. Details are not described herein again.

Exclusion manner #5: The first terminal considers the first duration, the RSRP threshold, and the second duration in the resource exclusion process.

In the resource selection process, in addition to an inappropriate resource based on the RSRP threshold, the first terminal further excludes a resource that may be blocked by another terminal in consideration of a case in which a transport block of the another terminal (for example, the second terminal) blocks the first terminal, and further excludes a resource that may be blocked by another terminal in consideration of a case in which a transport block of the first terminal blocks the another terminal (for example, the second terminal).

In the exclusion manner #5, that the first terminal performs resource selection based on the first duration, the RSRP threshold, and the second duration may be implemented in the following several possible implementations.

Implementation #4: The first terminal first performs resource exclusion based on the first duration, then performs resource exclusion based on the RSRP threshold, and finally performs resource exclusion based on the second duration.

Implementation #5: The first terminal first performs resource exclusion based on the first duration, then performs resource exclusion based on the second duration, and finally performs resource exclusion based on the RSRP threshold.

Implementation #6: The first terminal first performs resource exclusion based on the second duration, then performs resource exclusion based on the first duration, and finally performs resource exclusion based on the RSRP threshold.

A sequence of considering the first duration, the RSRP threshold, and the second duration in the resource exclusion process is not limited. Alternatively, two parameters may be considered at the same time, and details are not described herein again.

A difference from the foregoing implementation #1 and implementation #2 lies in that the second duration needs to be considered. That the first terminal performs resource exclusion based on the second duration may be understood as that the first terminal determines and excludes the resource in the second resource set based on the second duration. Specifically, a manner for determining the resource in the second resource set based on the second duration is described in detail above with reference to the determining manner #2. Details are not described herein again.

It should be understood that, in the foregoing implementation #4 to implementation #6, in the process in which the first terminal performs resource exclusion based on the second duration, the second duration is not adjusted. It can be learned from the existing resource selection process that the RSRP threshold based on which resource selection is performed may be adjusted (for example, when the quantity of remaining available resources is less than M*X%, the UE may increase the RSRP threshold by 3 dB, to perform resource reselection). In other words, in the process of performing resource selection based on the second duration, a value of the second duration may also be adjusted. In addition, the foregoing resource exclusion process further involves a priority threshold. Therefore, the priority threshold may also be used as an adjusted object. The following describes, with reference to an implementation #7, how to adjust the value of the second duration and/or a value of the priority threshold.

Implementation #7: The first terminal performs resource selection based on the first duration, the RSRP threshold, the priority threshold, and the second duration, and may adjust a value of at least one of the first duration, the RSRP threshold, the priority threshold, and the second duration.

Specifically, the first terminal may set an upper limit of the RSRP threshold (or a maximum value of the RSRP threshold), and in a process of updating the RSRP threshold, the upper limit of the RSRP threshold is not exceeded.

For example, the upper limit of the threshold may be set to infinity (infinity), to indicate that a resource corresponding to a transport block is not excluded regardless of RSRP of the transport block.

In a possible implementation, in this embodiment, the first terminal may set the upper limit of the RSRP threshold based on historical transmission data.

In another possible implementation, in this embodiment, the first terminal may receive, from another device (for example, a management device), information indicating the upper limit of the RSRP threshold.

It should be understood that, in this embodiment, how the first terminal determines the upper limit of the RSRP threshold is not limited. For example, the upper limit of the RSRP threshold may be selected as follows: When the first terminal performs resource selection by using the upper limit of the RSRP threshold according to only the resource selection method in R16, a quantity of remaining available resources is greater than M*X%.

Specifically, to avoid a case in which LBT fails to be performed before a resource in the candidate resource after resource selection, the first terminal sets a lower limit (or a minimum value of the first duration) of the first duration. For example, the lower limit of the first duration may be selected as follows: When the first terminal performs resource selection only by using the lower limit of the first duration, a quantity of remaining available resources is greater than M*X%.

For a process in which the first terminal performs resource selection based on the first duration, the RSRP threshold, the priority threshold, and the second duration in the implementation #7, refer to the foregoing implementation #4 to implementation #6. Details are not described herein again. A difference lies in the following.

If the quantity of remaining resources is less than M*X% after the first terminal performs resource exclusion based on the first duration, the RSRP threshold, the priority threshold, and the second duration, the first terminal may update the value of at least one of the first duration, the RSRP threshold, the priority threshold, and the second duration, and performs resource reselection until a quantity of obtained remaining available resources is greater than or equal to M*X% after resource selection is performed based on the first duration, the RSRP threshold, and the second duration.

In a possible implementation, if a quantity of remaining resources is less than M*X% after the first terminal device performs resource exclusion based on initial first duration, an initial RSRP threshold, an initial priority threshold, and initial second duration, the first terminal device first increases the RSRP threshold by 3 dB, and then performs resource exclusion. If the quantity of remaining resources is still less than M*X% after the RSRP threshold is increased to the upper limit, and if the value of the priority threshold does not reach an upper limit of the priority threshold, the first terminal device increases the priority threshold, restores the RSRP threshold to the initial value, and performs resource exclusion. After each time the priority threshold is increased, resource exclusion is performed based on an adjusted priority threshold. If the quantity of remaining resources is less than M*X%, the first terminal device needs to continue to increase the RSRP threshold, and then increase the priority threshold after the RSRP threshold reaches to the upper limit. The foregoing procedure is repeated. If the RSRP threshold is increased to the upper limit, the priority threshold is increased to a highest priority, but the quantity of remaining resources is still less than M*X%, if the value of the first duration does not reach the lower limit of the first duration, the first terminal decreases LBT duration (for example, decreases the first duration), restores both the RSRP threshold and the priority threshold to the initial values, and performs resource re-exclusion. It should be noted that resource re-exclusion is performed on all resources in the resource selection window. It may be understood that the resource is excluded from the resource selection window each time. In other words, when the first terminal decreases the value of the first duration and restores the RSRP threshold and the priority threshold to the initial values, a resource set on which resource exclusion is to be performed needs to be initialized to a resource set including all resources in the resource selection window. The foregoing process is performed iteratively until the quantity of remaining available resources is greater than M*X%. In this case, the physical layer reports the available resource to the MAC layer. For ease of understanding, with reference to (a) in FIG. 9, a procedure in which the first terminal performs resource selection in this implementation is described.

In still another possible implementation, if a quantity of remaining resources is less than M*X% after the first terminal device performs resource exclusion based on initial first duration, an initial RSRP threshold, an initial priority threshold, and initial second duration, the first terminal device first increases the priority threshold, and then performs resource exclusion. If the quantity of remaining resources is still less than M*X% after the priority threshold is increased to the highest priority, the first terminal device increases the RSRP threshold, restores the priority threshold to the initial value, and performs resource exclusion. After each time the RSRP threshold is increased, resource exclusion is performed based on an adjusted RSRP threshold. If the quantity of remaining resources is less than M*X%, the first terminal device needs to continue to increase the priority threshold, and then increase the RSRP threshold after the priority threshold reaches the upper limit. The foregoing procedure is repeated. If the priority threshold is increased to the highest priority, the RSRP threshold is increased to the upper limit, but the quantity of remaining resources is still less than M*X%, if the value of the first duration does not reach the lower limit of the first duration, the first terminal decreases LBT duration (for example, decreases the first duration), restores both the RSRP threshold and the priority threshold to the initial values, and performs resource re-exclusion. It should be noted that resource re-exclusion is performed on all resources in the resource selection window. It may be understood that the resource is excluded from the resource selection window each time. In other words, when the first terminal decreases the value of the first duration and restores the RSRP threshold and the priority threshold to the initial values, a resource set on which resource exclusion is to be performed needs to be initialized to a resource set including all resources in the resource selection window. The foregoing process is performed iteratively until the quantity of remaining available resources is greater than M*X%. In this case, the physical layer of the first terminal reports the available resource to the MAC layer of the first terminal. For ease of understanding, with reference to (b) in FIG. 9, a procedure in which the first terminal performs resource selection in this implementation is described.

It should be understood that the foregoing is merely an example for describing how the first terminal performs resource reselection by adjusting the value of at least one of the first duration, the RSRP threshold, and the priority threshold, and does not constitute any limitation on the protection scope of this application. For example, an amount reduced in the first duration each time and an amount increased in the RSRP threshold each time may be other values. Details are not described herein again.

For example, there are many manners for reducing the LBT duration. For example, one or more slots are reduced each time, or one or more $\mu s$ are reduced each time. A specific manner for reducing the first duration is not limited in this embodiment.

In the foregoing exclusion manner #5, all the first duration, the RSRP threshold, the priority threshold, and the second duration are considered in the resource exclusion process. In this embodiment, another exclusion manner is further provided, and the RSRP threshold and the second duration are considered in the resource exclusion process.

Exclusion manner #8: The first terminal considers the second duration and the RSRP threshold in the resource exclusion process.

Similar to the exclusion manner #4, in other words, in the exclusion manner #8, in the process of performing resource exclusion, in addition to the RSRP threshold, the first terminal further considers the second duration required by the second terminal to perform the second LBT, to avoid a case in which transmission of a first TB on a selected resource affects the LBT performed by the second terminal, and if the second terminal fails to perform the LBT, the second terminal performs resource reselection.

Specifically, that the first terminal performs resource exclusion based on the second duration and the RSRP threshold includes the following two implementations:

Implementation #8: The first terminal first performs resource exclusion based on the second duration, and then performs resource exclusion based on the RSRP threshold.

The first terminal first excludes a resource from the resource selection window based on the second duration, to obtain a resource set #2_1.

If a quantity of remaining resources after the first terminal excludes the resource from the resource selection window based on the second duration is greater than or equal to M*X%, a resource included in the resource set #2_1 is the remaining resource; or if the quantity of remaining resources after the first terminal excludes the resource from the resource selection window based on the second duration is less than M*X%, a resource included in the resource set #2_1 is a resource in the resource selection window.

In other words, in the implementation #8, in the process in which the first terminal performs resource exclusion based on the second duration, if the quantity of remaining resources after exclusion is less than M*X%, the resource in the resource selection window is reinitialized to a set including all resources (that is, a related resource is no longer excluded based on the second duration).

Then, the first terminal excludes a resource from the resource selection window based on the RSRP threshold, or excludes a resource from the resource set #2_1, to obtain the candidate resource set #2.

Implementation #9: The first terminal first performs exclusion based on the RSRP threshold, and then performs exclusion based on the second duration.

The first terminal excludes a resource from the resource selection window based on the RSRP threshold, to obtain a resource set #2_2, and a quantity of resources included in the resource set #2_2 is greater than or equal to M*X%;

The first terminal excludes a resource from the resource set #2_2, to obtain the candidate resource set #1.

It should be understood that resource exclusion performed by the first terminal based on the RSRP threshold is consistent with that in an existing protocol (step 6, section 8.1.4, 38.214). Details are not described in this application.

In addition, that the first terminal performs resource exclusion based on the second duration may be understood as that the first terminal determines and excludes the resource in the second resource set based on the second duration. Specifically, a manner for determining the resource in the second resource set based on the second duration is described in detail above with reference to the determining manner #2. Details are not described herein again.

It should be understood that, in the foregoing implementation #8 and implementation #9, in the process in which the first terminal performs resource exclusion based on the second duration, the second duration and/or the priority threshold are not adjusted. It can be learned from the existing resource selection process that the RSRP threshold based on which resource selection is performed may be adjusted (for example, when the quantity of remaining available resources is less than M*X%, the UE may increase the RSRP threshold by 3 dB, to perform resource reselection). In other words, in the process of performing resource selection based on the second duration, a value of the second duration may also be adjusted. In addition, it can be learned from the process of determining the second resource set described in the foregoing determining manner #2 that the value of the priority threshold in the process of determining the second resource set affects the resource included in the second resource set. The following describes, with reference to an implementation #10, how to adjust the value of at least one of the second duration, the RSRP threshold, and the priority threshold.

Implementation #10: The first terminal performs resource selection based on the second duration and the RSRP threshold, and may adjust at least one of the value of the second duration, the value of the RSRP threshold, or the value of the priority threshold.

Specifically, the first terminal may set an upper limit of the RSRP threshold (or a maximum value of the RSRP threshold), and in a process of updating the RSRP threshold, the upper limit of the RSRP threshold is not exceeded.

For example, the upper limit of the threshold may be set to infinity (infinity), to indicate that a resource corresponding to a transport block is not excluded regardless of RSRP of the transport block.

In a possible implementation, in this embodiment, the first terminal may set the upper limit of the RSRP threshold based on historical transmission data.

In another possible implementation, in this embodiment, the first terminal may receive, from another device (for example, a management device), information indicating the upper limit of the RSRP threshold.

It should be understood that, in this embodiment, how the first terminal determines the upper limit of the RSRP threshold is not limited. For example, the upper limit of the RSRP threshold may be selected as follows: When the first terminal performs resource selection by using the upper limit of the RSRP threshold according to only the resource selection method in R16, a quantity of remaining available resources is greater than M*X%.

Specifically, to avoid a case in which the second terminal fails to perform the LBT because transmission is performed on the selected resource after the resource is selected, the first terminal sets a lower limit (or a minimum value of the second duration) of the second duration. For example, the lower limit of the second duration may be selected as follows: When the second terminal performs resource selection only by using the lower limit of the second duration, a quantity of remaining available resources is greater than M*X%. The lower limit of the second duration may be notified by the second terminal or a management device to the first terminal.

For a process in which the first terminal performs resource selection based on the second duration and the RSRP threshold in the implementation #10, refer to the foregoing implementation #8 and implementation #9. Details are not described herein again. A difference lies in the following.

If the quantity of remaining resources is less than M*X% after the first terminal performs resource exclusion based on the initial RSRP threshold, an initial value of the second duration, and an initial value of the priority threshold, the first terminal may adjust at least one of the value of the second duration, the value of the RSRP threshold, or the value of the priority threshold, and performs resource reselection until a quantity of obtained remaining available resources is greater than or equal to M*X% after resource selection is performed based on the second duration and the RSRP threshold.

In a possible implementation, if a quantity of remaining resources is less than M*X% after the first terminal device performs resource exclusion based on an initial RSRP threshold, an initial priority threshold, and initial second duration, the first terminal device first increases the RSRP threshold by 3 dB, and then performs resource exclusion. If the quantity of remaining resources is still less than M*X% after the RSRP threshold is increased to the upper limit, the first terminal device increases the priority threshold, restores the RSRP threshold to the initial value, and performs resource exclusion. The foregoing procedure is repeated. If the RSRP threshold is increased to the upper limit, the priority threshold is increased to the highest priority, but the quantity of remaining resources is still less than M*X%. In this case, the first terminal decreases the second duration, restores both the RSRP threshold and the priority threshold to the initial values, and performs resource re-exclusion. The foregoing process is performed iteratively until the quantity of remaining available resources is greater than M*X%. In this case, the physical layer reports the available resource to the MAC layer.

In still another possible implementation, if a quantity of remaining resources is less than M*X% after the first terminal device performs resource exclusion based on an initial RSRP threshold, an initial priority threshold, and initial second duration, the first terminal device first increases the priority threshold, and then performs resource exclusion. If the quantity of remaining resources is still less than M*X % after the priority threshold is increased to the highest priority, the first terminal device increases the RSRP threshold, restores the priority threshold to the initial value, and performs resource exclusion. The foregoing procedure is repeated. If the priority threshold is increased to the highest priority, the RSRP threshold is increased to the upper limit, but the quantity of remaining resources is still less than M*X%. In this case, the first terminal decreases the second duration, restores both the RSRP threshold and the priority threshold to the initial values, and performs resource re-exclusion. The foregoing process is performed iteratively until the quantity of remaining available resources is greater than M*X%. In this case, the physical layer of the first terminal reports the available resource to the MAC layer of the first terminal.

Exclusion manner #9: In the resource exclusion process, if a quantity of remaining resources is less than a specified threshold (for example, the quantity of remaining resources is less than M*X%), the first terminal considers setting $t_{LBT}/t'_{LBT}$ to $T_d$ in a corresponding CAPC (in this case, impact of a counter in LBT on LBT duration is not considered).

$t_{LBT}=T_f+m_p * 9$ us, $T_f$ is 16 μs, where $m_p$ is a value corresponding to a CAPC value of a PSSCH to be transmitted by the first terminal. $t'_{LBT}=T_f + m_p * 9\ us$, $T_f$ is 16 μs, where $m_p$ is a value corresponding to a CAPC value of a reserved resource.

After $t_{LBT}/t'_{LBT}$ is determined, resource exclusion is performed according to the foregoing methods of the exclusion manner #1 to the exclusion manner #3.

Exclusion manner #10: If the first terminal determines the second transport block and/or the third transport block based on the RSRP threshold. In addition, in the resource exclusion process, the first unavailable resource and/or the second unavailable resource (that is, the first unavailable resource does not include the resource part #2 and/or the second unavailable resource does not include the resource part #4) are/is determined based on a time-frequency resource associated with the second transport block and/or a time-frequency resource associated with the third transport block. In this exclusion manner, if a quantity of remaining resources is less than a specified threshold (for example, the quantity of remaining resources is less than M*X%), the RSRP threshold may be adjusted. A manner for adjusting the RSRP threshold may reuse a manner in the existing protocol. It should be understood that, as the RSRP threshold increases, a quantity of second transport blocks and/or a quantity of third transport blocks decrease/decreases, and a quantity of resources in the first unavailable resource and/or a quantity of resources in the second unavailable resource that are/is determined based on the second transport block and/or the third transport block also decrease/decreases.

The foregoing exclusion manner #1 to exclusion manner #10 describe in detail the case in which the first terminal considers the first duration required by the first terminal to perform the first LBT and/or the second duration required by the second terminal to perform the second LBT in the process of performing resource exclusion. When the first duration is considered, the failure of performing the LBT before the selected resource can be avoided, that is, the failure of transmitting the first TB by the first terminal on the selected resource can be avoided, so that a probability of performing resource reselection by the first terminal can be reduced, and overheads of the first terminal are reduced. In addition, when the second duration is considered, the case in which the second terminal fails to perform the LBT because the first terminal transmits the first TB on the selected resource can be avoided, so that the transmission failure of the second terminal can be avoided, a probability of performing resource reselection by the second terminal is reduced, and overheads of the second terminal are reduced. Alternatively, when determining the second transport block and/or the third transport block, the first terminal considers the transport block whose corresponding RSRP is greater than the RSRP threshold. In this case, the first terminal only needs to consider the RSRP threshold in the process of performing resource exclusion, thereby simplifying the resource exclusion procedure.

Specifically, similar to the current resource selection process, in this application, the terminal may also perform resource re-evaluation. For example, before sending a first TB on an eighth resource, the first terminal re-evaluates the eighth resource. Specifically, re-evaluating the eighth resource may be understood as determining whether the eighth resource belongs to a resource in a new candidate resource set determined based on a new resource sensing window and a new resource selection window. The new resource sensing window and the new resource selection window are respectively a resource sensing window and a resource selection window that are determined based on a location of the eighth resource. The eighth resource may be understood as a resource that is selected by a MAC layer of the first terminal from a candidate resource set (for example, the candidate resource set determined in the embodiment shown in FIG. 4) reported by a physical layer of the first terminal and that is used to transmit the first TB.

For example, after the resource sensing window and the resource selection window are determined based on the location of the eighth resource, the method shown in FIG. 4 may be reused to perform resource reselection to obtain a new candidate resource set, and the new candidate resource set is reported to the MAC layer of the first terminal. The MAC layer of the first terminal determines whether the eighth resource belongs to the new candidate resource set.

It should be understood that a procedure of the resource re-evaluation is not limited in this embodiment. For details, refer to a mechanism in the existing protocol. This embodiment mainly relates to a solution in which the LBT duration is considered in the resource selection process, and the solution may be understood as an enhancement of the current resource selection solution.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in a conventional network architecture is mainly used as an example for description (for example, a terminal device). It should be understood that a specific form of the device is not limited in embodiments of this application. For example, all devices that can implement a same function in the future are applicable to embodiments of this application.

It may be understood that, in the foregoing method embodiments, methods and operations implemented by the device (for example, the terminal device) may alternatively be implemented by a component (for example, a chip or a circuit) of the device.

The following describes in detail, with reference to FIG. 4, the resource selection method provided in embodiments of this application. The foregoing resource selection method is mainly described from a perspective of the terminal device. It may be understood that, to implement the foregoing functions, the terminal device includes corresponding hardware structures and/or software modules for performing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail a communication apparatus provided in embodiments of this application with reference to FIG. 10 to FIG. 12. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit-end device or a receive-end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

FIG. 10 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. Alternatively, the transceiver module 11 is configured to perform receiving and sending-related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, for the apparatus to implement an action of the device in the foregoing method embodiments.

In a first design, the apparatus 10 may correspond to the first terminal device in the foregoing method embodiment, or may be a component (for example, a chip) of the first terminal device.

The apparatus 10 may implement steps or procedures performed by the first terminal device in the foregoing method embodiments. The transceiver module 11 may be configured to perform receiving and sending-related operations of the first terminal device in the foregoing method embodiments. The processing module 12 may be configured to perform processing-related operations of the first terminal device in the foregoing method embodiments.

In a possible implementation, the processing module 12 is configured to: before determining a resource used to transmit a first transport block, determine first duration required by the apparatus to perform first listen before talk LBT, and determine a first resource set in a resource selection window based on the first duration; and/or the processing module is further configured to determine second duration required by a second terminal to perform second LBT, and determine a second resource set in the resource selection window based on the second duration. The processing module 12 is further configured to select the first transmission resource based on at least one of the first resource set or the second resource set, where the first transmission resource is used by the first terminal to transmit the first transport block; and the resource selection window is used to select the first transmission resource.

When the apparatus 10 is configured to perform the method in FIG. 4, the transceiver module 11 may be configured to perform the step of sending information in the method, and the processing module 12 may be configured to perform processing steps in the method, for example, steps S410, S420, and S430.

It should be understood that a specific process in which the units perform the foregoing corresponding steps is described in detail in the foregoing method embodiments, and for brevity, details are not described herein.

It should also be understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (such as the terminal device) in the foregoing method. The function may be implemented by hardware, or may be implemented by hardware executing corresponding software. The hardware or software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform sending and receiving operations and a related processing operation in the method embodiments.

In addition, the transceiver module 11 may alternatively be a transceiver circuit (for example, may include a receiver circuit and a transmitter circuit), and the processing module may be a processing circuit.

FIG. 11 is a diagram of a communication apparatus 20 according to an embodiment of this application. The apparatus 20 includes a processor 21. The processor 21 is configured to execute a computer program or instructions stored in the memory 22, or read data/signaling stored in the memory 22, to perform the method in the foregoing method embodiments. Optionally, there are one or more processors 21.

Optionally, as shown in FIG. 12, the apparatus 20 further includes a memory 22, and the memory 22 is configured to store a computer program or instructions and/or data. The memory 22 may be integrated with the processor 21, or may be disposed separately. Optionally, there are one or more memories 22.

Optionally, as shown in FIG. 12, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the first terminal device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

FIG. 12 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to and connected to a storage unit, and invoke instructions in the storage unit, for the chip system 30 to implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the first terminal device in the foregoing method embodiments.

For example, the logic circuit 31 is configured to implement processing-related operations performed by the first terminal device in the foregoing method embodiments, and the input/output interface 32 is configured to implement receiving and/or sending-related operations performed by the first terminal device in the foregoing method embodiments.

An embodiment of this application further provides a computer-readable storage medium. The computer-readable storage medium stores computer instructions for implementing the method performed by the device in the foregoing method embodiments.

For example, when a computer program is executed by a computer, the computer implements the method performed by the first terminal device in the foregoing method embodiments.

An embodiment of this application further provides a computer program product, including instructions. When the instructions are executed by a computer, the method performed by the first terminal device in the foregoing method embodiments is implemented.

An embodiment of this application further provides a communication system, including the foregoing first terminal device and second terminal device.

For explanations and beneficial effect of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource selection method, comprising:

   before determining a first transmission resource used to transmit a first transport block, determining, by a first terminal, first duration required by the first terminal to perform first listen before talk LBT, and determining a first unavailable resource in a resource selection window based on the first duration; and/or determining, by the first terminal, second duration required by a second terminal to perform second LBT, and determining a second unavailable resource in the resource selection window based on the second duration; and
   selecting, by the first terminal, the first transmission resource based on at least one of the first unavailable resource or the second unavailable resource, wherein the first transmission resource is used by the first terminal to transmit the first transport block, wherein
   the resource selection window is used to select the first transmission resource.

2. The method according to claim 1, wherein the selecting, by the first terminal, the first transmission resource based on at least one of the first unavailable resource or the second unavailable resource comprises:
   excluding, by the first terminal, the first unavailable resource from the resource selection window; and/or excluding, by the first terminal, the second unavailable resource from the resource selection window, to obtain a candidate resource set, and select the first transmission resource from the candidate resource set.

3. The method according to claim 1, wherein the method further comprises: obtaining, by the first terminal, a candidate resource set; and
   the selecting, by the first terminal, the first transmission resource based on at least one of the first unavailable resource or the second unavailable resource comprises:
   selecting, by the first terminal, the first transmission resource based on the candidate resource set and at least one of the first unavailable resource or the second unavailable resource.

4. The method according to any one of claims 1 to 3, wherein the determining, by the first terminal, a first unavailable resource in a resource selection window based on the first duration comprises:

   determining, by the first terminal, a resource in the first unavailable resource based on the first duration and a resource associated with a second transport block received in a first slot in a resource sensing window; and/or determining, by the first terminal, a resource in the first unavailable resource based on the first duration and a resource associated with a second slot that is not monitored in the resource sensing window, wherein
   the resource sensing window is used to monitor a time-frequency resource, and determine the candidate resource set in the resource selection window, received energy of the second transport block is greater than an energy threshold of LBT or reference signal received power RSRP corresponding to the second transport block is greater than an RSRP threshold, and a channel occupied by the second transport block is incapable of being shared by the first transport block transmitted by the first terminal.

5. The method according to claim 4, wherein the determining, by the first terminal, a resource in the first unavailable resource based on the first duration and a resource associated with a second transport block comprises:

   determining, by the first terminal, a second resource in the first unavailable resource based on the first duration and a first resource associated with the second transport block, wherein
   the second resource is later than the first resource in time domain, an interval between the second resource and the first resource in time domain is less than or equal to the first duration, and the second resource and the first resource are located on a same LBT channel in frequency domain.

6. The method according to claim 4 or 5, wherein the determining, by the first terminal, a resource in the first unavailable resource based on the first duration and a resource associated with a second slot that is not monitored comprises:

determining, by the first terminal, a fourth resource in the first unavailable resource based on the first duration and a third resource associated with the second slot that is not monitored, wherein
the fourth resource is later than the third resource in time domain, an interval between the fourth resource and the third resource in time domain is less than or equal to the first duration, and the fourth resource and the third resource are located on a same LBT channel in frequency domain.

7. The method according to any one of claims 4 to 6, wherein before the determining, by the first terminal, a first unavailable resource, the method further comprises:
determining, by the first terminal, that a channel access priority class CAPC value of the first transport block meets a first preset condition.

8. The method according to any one of claims 1 to 7, wherein the determining, by the first terminal, second duration required by a second terminal to perform LBT comprises:

receiving, by the first terminal, a third transport block from the second terminal in the resource sensing window, wherein the third transport block carries a channel access priority class CAPC value; and
determining, by the first terminal, the second duration based on the CAPC value.

9. The method according to any one of claims 1 to 8, wherein the determining, by the first terminal, a second unavailable resource in the resource selection window based on the second duration comprises:

determining, by the first terminal, a resource in the second unavailable resource based on the second duration and a resource associated with a third transport block received in a third slot in the resource sensing window; and/or
determining, by the first terminal, a resource in the second unavailable resource based on the second duration and the resource associated with the second slot that is not monitored in the resource sensing window, wherein a priority of the third transport block is greater than a priority threshold, and the third transport block is incapable of sharing a channel occupied by the to-be-transmitted first transport block.

10. The method according to claim 9, wherein reference signal received power RSRP corresponding to the third transport block is greater than the RSRP threshold.

11. The method according to claim 9 or 10, wherein the determining, by the first terminal, a resource in the second unavailable resource based on the second duration and a resource associated with a third transport block comprises:

determining, by the first terminal, a sixth resource in the second unavailable resource based on the second duration and a fifth resource associated with the third transport block, wherein
the sixth resource is earlier than the fifth resource in time domain, an interval between the sixth resource and the fifth resource in time domain is less than or equal to the second duration, and the sixth resource and the fifth resource are located on a same LBT channel in frequency domain.

12. The method according to any one of claims 9 to 11, wherein the determining, by the first terminal, a resource in the second unavailable resource based on the second duration and the resource associated with the second slot that is not monitored comprises:

determining, by the first terminal, a seventh resource in the second unavailable resource based on the second duration and the third resource associated with the second slot that is not monitored, wherein
the seventh resource is earlier than the third resource in time domain, an interval between the seventh resource and the third resource in time domain is less than or equal to the second duration, and the seventh resource and the third resource are located on a same LBT channel in frequency domain.

13. The method according to any one of claims 9 to 12, wherein before the determining, by the first terminal, a second unavailable resource, the method further comprises:

determining, by the first terminal, that the channel access priority class CAPC value of the third transport block meets the first preset condition.

14. The method according to any one of claims 2 to 13, wherein the obtaining, by the first terminal, a candidate resource set comprises:
determining, by the first terminal, the candidate resource set based on the reference signal received power RSRP threshold, wherein the RSRP threshold is a higher-layer parameter of the first terminal, and the RSRP threshold is preconfigured or configured.

15. The method according to claim 14, wherein before the obtaining, by the first terminal, a candidate resource set, the method further comprises:

adjusting, by the first terminal, at least one of a value of the first duration, a value of the second duration, a value of the RSRP threshold, and a value of the priority threshold; and

determining, by the first terminal, the first unavailable resource and/or the second unavailable resource in the resource selection window based on at least one of an adjusted value of the first duration, an adjusted value of the second duration, an adjusted value of the RSRP threshold, and an adjusted value of the priority threshold.

16. The method according to any one of claims 1 to 15, wherein the first LBT is associated with an unlicensed frequency band.

17. The method according to any one of claims 1 to 16, wherein the second LBT is associated with an unlicensed frequency band.

18. The method according to any one of claims 1 to 17, wherein the determining, by a first terminal, first duration required by the first terminal to perform first LBT comprises:
determining, by the first terminal based on preconfigured or predefined first duration, the first duration required by the first terminal to perform the first LBT.

19. The method according to any one of claims 1 to 18, wherein the determining, by the first terminal, second duration required by a second terminal to perform second LBT comprises:
determining, by the first terminal based on preconfigured or predefined second duration, the second duration required by the second terminal to perform the second LBT.

20. A first terminal, wherein the first terminal comprises a processor and a memory, the processor is coupled to the memory, the memory is configured to store a computer program, and when the processor runs the computer program, the first terminal is enabled to perform the method according to any one of claims 1 to 19.

21. A computer-readable storage medium, wherein the computer-readable storage medium stores computer instructions, and when the computer instructions are run on a first terminal, the first terminal is enabled to perform the method according to any one of claims 1 to 19.

22. A computer program product, comprising instructions, wherein when the computer instructions are run on a first terminal, the first terminal is enabled to perform the method according to any one of claims 1 to 19.

23. A chip, wherein the chip is installed in a first terminal, the chip comprises a processor and a communication interface, and when the processor reads instructions through the communication interface and runs the instructions, the first terminal is enabled to perform the method according to any one of claims 1 to 19.

FIG. 1

FIG. 2

Resource sensing window        Resource selection window

Resource 1 — Exclude — → Resource 1

Resource 2 — Not exclude — → Resource 2

(a)

AGC / PSCCH / DMRS / DMRS / GAP    AGC / PSCCH / DMRS / AGC / PSCCH / DMRS / GAP

d

(b)

AGC / PSCCH / DMRS / DMRS / GAP    AGC / PSCCH / DMRS / DMRS / GAP

d

(c)

**FIG. 3**

S410

A first terminal determines first duration required by the first terminal to perform first LBT, and/or determines second duration required by a second terminal to perform second LBT

S420

The first terminal determines an unavailable first resource set in a resource selection window based on the first duration, and/or the first terminal determines an unavailable second resource set in the resource selection window based on the second duration

S430

The first terminal selects, based on at least one of the first resource set or the second resource set, a first transmission resource used to transmit a first transport block

**FIG. 4**

Less than
first
duration

Resource
#A

Resource
#A'

Resource
#B

Resource sensing window

Resource selection window

FIG. 5

FIG. 6

| Resource #1 | | | | Resource #1' | | |
| --- | --- | --- | --- | --- | --- | --- |
| | | Resource #2 | | Resource #2' | | |
| | | | | | | |

n$-$T$_0$        n$-$T$_{proc,\,0}$        n$+$T$_1$        n$+$T$_2$

Resource sensing window        Resource selection window

FIG. 7

**(a)**

```
┌─────────────────────────────────┐
│ Perform resource exclusion based on
│ an RSRP threshold and first duration,
│ to obtain remaining resources
└─────────────────────────────────┘
```

Whether a quantity of remaining resources is greater than or equal to M*X%

Yes → Report the remaining resources to a higher layer

No ↓

Increase the RSRP threshold by 3 dB

Whether the RSRP threshold reaches an upper limit

No →

Yes ↓

Decrease a value of the first duration, restore the RSRP threshold to an initial value, and initialize a resource set on which resource exclusion is to be performed to all resources in a resource selection window

**(b)**

```
┌─────────────────────────────────┐
│ Perform resource exclusion based on
│ an RSRP threshold and first duration,
│ to obtain remaining resources
└─────────────────────────────────┘
```

Whether a quantity of remaining resources is greater than or equal to M*X%

Yes → Report the remaining resources to a higher layer

No ↓

Decrease a value of the first duration

Whether the value of the first duration reaches a lower limit

No →

Yes ↓

Increase the RSRP threshold by 3 dB, restore the value of the first duration to an initial value, and initialize a resource set on which resource exclusion is to be performed to all resources in a resource selection window

FIG. 8

## (a)

Perform resource exclusion based on an RSRP threshold, first duration, a priority threshold, and second duration, to obtain remaining resources

Whether a quantity of remaining resources is greater than or equal to M*X% — Yes → Report the remaining resources to a higher layer

No ↓

Increase the RSRP threshold by 3 dB

Whether the RSRP threshold reaches an upper limit

↓ Yes

Whether the priority threshold reaches an upper limit — No → Increase the priority threshold, restore the RSRP threshold to an initial value, and initialize a resource set on which resource exclusion is to be performed to all resources in a resource selection window

↓ Yes

Whether the first duration reaches a lower limit — No → Decrease a value of the first duration, restore the priority threshold and the RSRP threshold to initial values, and initialize a resource set on which resource exclusion is to be performed to all resources in a resource selection window

↓ Yes

End

## (b)

Perform resource exclusion based on an RSRP threshold, first duration, a priority threshold, and second duration, to obtain remaining resources

Whether a quantity of remaining resources is greater than or equal to M*X% — Yes → Report the remaining resources to a higher layer

No ↓

Increase the priority threshold

Whether the priority threshold reaches an upper limit

↓ Yes

Whether the RSRP threshold reaches an upper limit — No → Increase the RSRP threshold by 3 dB, restore the priority threshold to an initial value, and initialize a resource set on which resource exclusion is to be performed to all resources in a resource selection window

↓ Yes

Whether the first duration reaches a lower limit — No → Decrease a value of the first duration, restore the priority threshold and the RSRP threshold to initial values, and initialize a resource set on which resource exclusion is to be performed to all resources in a resource selection window

↓ Yes

End

FIG. 9

10

Transceiver module 11

Processing module 12

Storage module 13

FIG. 10

20

Processor 21 ———— Transceiver 23

Memory 22

FIG. 11

Chip system 30

Logic circuit 31

Input/Output interface 32

FIG. 12

# EP 4 543 112 A1

<table>
<tr><td colspan="2"><strong>INTERNATIONAL SEARCH REPORT</strong></td><td>International application No.<br><strong>PCT/CN2023/106345</strong></td></tr>
</table>

**A.    CLASSIFICATION OF SUBJECT MATTER**

H04W 72/02(2009.01)i

According to International Patent Classification (IPC) or to both national classification and IPC

**B.    FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 边链路, 侧链路, 侧行, 时长, 时间, 选择, 资源, 窗, 排除, 不可用, 阈值, 门限, CAPC, duration, lbt, resource, RSRP, sidelink, slot, time, window, select+, threshold

**C.    DOCUMENTS CONSIDERED TO BE RELEVANT**

| Category* | Citation of document, with indication, where appropriate, of the relevant passages | Relevant to claim No. |
|---|---|---|
| X | US 2022061095 A1 (QUALCOMM INC.) 24 February 2022 (2022-02-24)<br>description, paragraphs [0041]-[0228] | 1-7, 14-16, 18, 20-23 |
| A | CN 111526540 A (BEIJING SAMSUNG TELECOM R&D CENTER et al.) 11 August 2020 (2020-08-11)<br>entire document | 1-23 |
| A | WO 2021223240 A1 (GUANGDONG OPPO MOBILE TELECOMMUNICATIONS CORP., LTD.) 11 November 2021 (2021-11-11)<br>entire document | 1-23 |
| A | US 2022159725 A1 (QUALCOMM INC.) 19 May 2022 (2022-05-19)<br>entire document | 1-23 |
| A | MEDIATEK INC. "Discussion on Channel Access Mechanism"<br>*3GPP TSG RAN WG1 #109-e R1- 2204730,* 20 May 2022 (2022-05-20),<br>entire document | 1-23 |

☐ Further documents are listed in the continuation of Box C.      ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **20 September 2023** | **26 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

47

**INTERNATIONAL SEARCH REPORT**
**Information on patent family members**

International application No.

**PCT/CN2023/106345**

| Patent document cited in search report | | | Publication date (day/month/year) | Patent family member(s) | | | Publication date (day/month/year) |
|---|---|---|---|---|---|---|---|
| US | 2022061095 | A1 | 24 February 2022 | WO | 2022039852 | A1 | 24 February 2022 |
| CN | 111526540 | A | 11 August 2020 | WO | 2020159329 | A1 | 06 August 2020 |
| | | | | KR | 20210111263 | A | 10 September 2021 |
| | | | | US | 2022232532 | A1 | 21 July 2022 |
| | | | | US | 2020252910 | A1 | 06 August 2020 |
| | | | | EP | 3903531 | A1 | 03 November 2021 |
| WO | 2021223240 | A1 | 11 November 2021 | EP | 4138479 | A1 | 22 February 2023 |
| | | | | US | 2023063943 | A1 | 02 March 2023 |
| | | | | CN | 115486170 | A | 16 December 2022 |
| US | 2022159725 | A1 | 19 May 2022 | US | 2023007692 | A1 | 05 January 2023 |
| | | | | WO | 2022104307 | A1 | 19 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210823531
- CN 202210961969X
- CN 202310539657